# EUROPEAN PATENT APPLICATION

(11) **EP 4 794 300 A1**
(43) Date of publication of application: **19.08.2026**
(21) Application number: 24884750.1
(22) Date of filing: 29.10.2024
(51) Int. Cl.: H04L 65/80

(54) **DATA PROCESSING METHOD, RELATED DEVICE AND COMMUNICATION SYSTEM**

(30) Priority: 31.10.2023 CN 202311438912
(71) Applicant: HUAWEI TECHNOLOGIES CO., LTD., Shenzhen 518129 (CN)
(72) Inventor: PAN, Qi, Shenzhen, Guangdong 518129 (CN); CHEN, Jiaao, Shenzhen, Guangdong 518129 (CN); NI, Hui, Shenzhen, Guangdong 518129 (CN)
(74) Representative: Isarpatent
(86) International application number: PCT/CN2024/128226
(87) International publication number: WO 2025/092747

(57) **Abstract**

A data processing method, a related device, and a communication system are provided. The method includes: A first device obtains a first data packet and a second data packet in a traffic flow, where the first data packet includes a first data identifier and a flow identifier of the traffic flow, and the second data packet includes a second data identifier and the flow identifier of the traffic flow; and performs, based on the first data identifier, the second data identifier, and a processing rule corresponding to the flow identifier, quality of service QoS flow mapping on the first data packet and the second data packet, so as to map the first data packet to a first QoS flow for bearing and map the second data packet to a second QoS flow for bearing.

## Description

This application claims priority to Chinese Patent Application No. 202311438912.2, filed with the China National Intellectual Property Administration on October 31, 2023 and entitled "DATA PROCESSING METHOD, RELATED DEVICE, AND COMMUNICATION SYSTEM", which is incorporated herein by reference in its entirety.

### TECHNICAL FIELD

This application relates to the field of extended reality (extended reality, XR), and in particular, to a data processing method, a related device, and a communication system.

### BACKGROUND

Currently, for hybrid service scenarios involving simultaneous transmission of a plurality of types of data such as audio and video, the real-time transport protocol (real-time transport protocol, RTP) session-level multiplexing technique is widely used. This technique multiplexes different types of service data packets in a same real-time transport protocol (real-time transport protocol, RTP) session. In this case, different types of service data flows share one piece of traffic flow description information (for example, internet protocol (Internet Protocol, IP) 5-tuple or IP 3-tuple information). A 5th generation mobile communication system (5th generation wireless system, 5GS) can distinguish only data packets in different RTP sessions and perform corresponding quality of service (quality of service, QoS) handling on the RTP sessions. It cannot distinguish data packets with different QoS requirements in a same RTP session. In other words, it cannot perform corresponding QoS handling on different data packets multiplexed in the same RTP session.

### SUMMARY

Embodiments of this application provide a data processing method, a related device, and a communication system. According to embodiments of this application, QoS requirements of different data packets in a same traffic flow can be distinguished, and corresponding QoS handling can be performed on the different data packets.

According to a first aspect, an embodiment of this application provides a data processing method. The method may be applied to a first device. The first device may be a user plane function (user plane function, UPF) network element or a user equipment.

The first device obtains a first data packet and a second data packet in a traffic flow, where the first data packet includes a flow identifier of the traffic flow and a first data identifier, and the second data packet includes the flow identifier of the traffic flow and a second data identifier; and the first device performs, based on the first data identifier, the second data identifier, and a processing rule corresponding to the flow identifier, QoS flow mapping on the first data packet and the second data packet, so as to map the first data packet to a first QoS flow for bearing and map the second data packet to a second QoS flow for bearing.

A QoS flow indicated by a QoS flow identifier is used to bear a corresponding data packet. A flow identifier in each data packet indicates the traffic flow. Optionally, the flow identifier is optional, and the flow identifier is an IP 5-tuple, an IP 3-tuple, a type of service (type of service, ToS) of an IPv4 header, a flow label (flow label) of an IPv6 header, or the like. Data packets included in the traffic flow may include data packets of different data flows such as an audio data packet, a video data packet, a haptic data packet, an RTP data packet, and an RTCP data packet.

A data identifier carried in a data packet in the traffic flow is detected, different data packets in the same traffic flow are distinguished based on data identifiers, and the data packets are mapped to QoS flows corresponding to different QoS requirement parameters, so that corresponding QoS handling is performed on the different data packets in the same traffic flow.

With reference to the first aspect, in a possible implementation, that the first device performs, based on the first data identifier, the second data identifier, and the processing rule corresponding to the flow identifier, QoS flow mapping on the first data packet and the second data packet includes:
adding an identifier of the first QoS flow to the first data packet, and adding an identifier of the second QoS flow to the second data packet, where the first data identifier corresponds to the identifier of the first QoS flow, and the second data identifier corresponds to the identifier of the second QoS flow.

With reference to the first aspect, in a possible implementation, the method in this embodiment further includes:
The first device obtains the processing rule corresponding to the flow identifier of the traffic flow, where the processing rule includes a data identifier of each data packet in the traffic flow and a QoS flow identifier corresponding to the data identifier of each data packet, and the processing rule of the traffic flow indicates the first device to perform, based on the data identifiers, QoS flow mapping on the data packets in the traffic flow.

It should be understood that one QoS flow identifier corresponds to one or more data identifiers.

It should be understood that the processing rule of the traffic flow may be understood as that the processing rule includes information related to the traffic flow, for example, flow identification information.

The processing rule is introduced, to help the first device determine, based on the data identifier of the data packet, the QoS flow identifier added to the data packet, so that corresponding QoS handling is performed on different data packets in the same traffic flow.

With reference to the first aspect, in a possible implementation, the processing rule indicates that the data identifier is a synchronization source (synchronization source, SSRC) identifier or a payload type identifier. Specifically, the SSRC identifier and the payload type identifier are in an RTP layer header of the data packet.

With reference to the first aspect, in a possible implementation, the processing rule indicates that the data identifier is a data type identifier indicating that the data packet is an RTP data packet or a real-time transport control protocol (real-time transport control protocol, RTCP) data packet.

With reference to the first aspect, in a possible implementation, the processing rule
indicates that the data identifier of the data packet includes an identifier indicating that the data packet is an RTP data packet and an SSRC identifier of the data packet; or
indicates that the data identifier of the data packet includes an identifier indicating that the data packet is an RTP data packet and a payload type identifier of the data packet; or
indicates that the data identifier of the data packet indicates that the data packet is an RTCP data packet.

With reference to the first aspect, in a possible implementation, the processing rule is generated based on the data identifier and a QoS requirement parameter corresponding to the data identifier. The QoS requirement parameter may be a specific QoS parameter, for example, a bandwidth, a delay, a packet loss rate, or a transmission priority.

With reference to the first aspect, in a possible implementation, the first device is a user plane function network element or a user equipment. When the first device is a user equipment, the method in this embodiment further includes:
sending the data identifier and the QoS requirement parameter corresponding to the data identifier to a session management function (session management function, SMF) network element or a policy control function (policy control function, PCF) network element. The user equipment sends the data identifier and the QoS requirement parameter corresponding to the data packet to the SMF network element or the PCF network element through an access and mobility management function (access and mobility function, AMF) network element.

According to a second aspect, an embodiment of this application provides a data processing method. The method is applied to an SMF network element.

The SMF network element obtains a flow identifier, a first data identifier included in a first data packet in a traffic flow identified by the flow identifier, a second data identifier included in a second data packet in the traffic flow identified by the flow identifier, a first QoS requirement parameter corresponding to the first data identifier, and a second QoS requirement parameter corresponding to the second data identifier; the SMF network element generates, based on the flow identifier, the first data identifier, the second data identifier, the first QoS requirement parameter, and the second QoS requirement parameter, a processing rule corresponding to the flow identifier; and the SMF network element sends, to a target UPF network element or a user equipment, the processing rule corresponding to the flow identifier, where the processing rule includes the first data identifier, a QoS flow identifier corresponding to the first data identifier, the second data identifier, and a QoS flow identifier corresponding to the second data identifier. The processing rule indicates the UPF network element or the user equipment to perform, based on a data identifier of a data packet in the traffic flow, QoS flow mapping on the data packet in the traffic flow, so as to map the first data packet to a first QoS flow for bearing and map the second data packet to a second QoS flow for bearing.

The target UPF network element is a UPF network element that is selected by the SMF network element and that supports a capability of performing differentiated QoS handling based on the data identifier.

It can be learned that the SMF generates the processing rule of the traffic flow based on the data identifier and a QoS requirement corresponding to the data identifier, and sends the processing rule of the traffic flow to the user equipment or the UPF network element, so that corresponding QoS handling is performed on different data packets in the same traffic flow based on data identifiers.

It should be understood that, that the processing rule corresponds to the traffic flow indicated by the flow identifier may be that the processing rule includes the flow identifier corresponding to the traffic flow, for example, information such as an IP 3-tuple or an IP 5-tuple.

With reference to the second aspect, in a possible implementation, the processing rule indicates that the data identifier is an SSRC identifier or a payload type identifier.

With reference to the second aspect, in a possible implementation, the processing rule indicates that the data identifier is a data type identifier indicating that the data packet is an RTP data packet or an RTCP data packet.

With reference to the first aspect, in a possible implementation, the processing rule
indicates that the data identifier of the data packet includes an identifier indicating that the data packet is an RTP data packet and an SSRC identifier of the data packet; or
indicates that the data identifier of the data packet includes an identifier indicating that the data packet is an RTP data packet and a payload type identifier of the data packet; or
indicates that the data identifier of the data packet indicates that the data packet is an RTCP data packet.

With reference to the second aspect, in a possible implementation, the processing rule indicates the data identifier and a QoS requirement parameter corresponding to the data identifier, and the UPF network element or the user equipment performs, based on the data identifier, QoS flow mapping on the data packet in the traffic flow, and maps, based on the data identifier, the data packet in the traffic flow to a QoS flow that meets the QoS requirement parameter corresponding to the data identifier. The QoS flow mapping is specifically adding, to the data packet, a QoS flow identifier corresponding to the QoS flow.

With reference to the second aspect, in a possible implementation, that the SMF network element obtains the plurality of data identifiers and the QoS requirement parameter corresponding to each data identifier includes: The SMF network element obtains a plurality of PCC rules, where each PCC rule includes at least one data identifier corresponding to a same QoS requirement parameter and the corresponding QoS requirement parameter.

According to a third aspect, an embodiment of this application provides a data processing method. The method is applied to a PCF network element.

The PCF network element receives an application function AF request sent by an application server, where the AF request includes a flow identifier, a plurality of data identifiers, and a QoS requirement parameter corresponding to each data identifier; and generates a plurality of PCC rules based on the plurality of data identifiers and the QoS requirement parameter corresponding to each data identifier, where each PCC rule includes at least one data identifier corresponding to a same QoS requirement parameter and the corresponding QoS requirement parameter; and the flow identifier and the plurality of PCC rules are used to generate a processing rule, the processing rule corresponds to a traffic flow indicated by the flow identifier, the processing rule includes the plurality of data identifiers and a QoS flow identifier corresponding to each data identifier, and the processing rule indicates a UPF network element or a user equipment to perform, based on a data identifier, QoS flow mapping on a data packet in the traffic flow.

The PCF network element generates the plurality of PCC rules based on the plurality of data identifiers and the QoS requirement parameter corresponding to each data identifier, and sends the plurality of PCC rules to an SMF network element, so that the SMF network element generates the processing rule of the traffic flow based on the plurality of PCC rules and the flow identifier of the traffic flow, and sends the processing rule of the traffic flow to the user equipment or the UPF network element, so that corresponding QoS handling is performed on different data packets in the same traffic flow based on data identifiers.

It should be understood that, that the processing rule corresponds to the traffic flow indicated by the flow identifier may be that the processing rule includes the flow identifier corresponding to the traffic flow, for example, information such as an IP 3-tuple or an IP 5-tuple.

With reference to the third aspect, in a possible implementation, the processing rule indicates that the data identifier is an SSRC identifier or a payload type identifier.

With reference to the third aspect, in a possible implementation, the processing rule indicates that the data identifier is a data type identifier indicating that the data packet is an RTP data packet or an RTCP data packet.

With reference to the third aspect, in a possible implementation, the processing rule
indicates that the data identifier of the data packet includes an identifier indicating that the data packet is an RTP data packet and an SSRC identifier of the data packet; or
indicates that the data identifier of the data packet includes an identifier indicating that the data packet is an RTP data packet and a payload type identifier of the data packet; or
indicates that the data identifier of the data packet includes an identifier indicating that the data packet is an RTCP data packet.

According to a fourth aspect, an embodiment of this application provides a first device, including a unit or a module configured to implement the method provided in any one of the first aspect or the possible implementations of the first aspect.

According to a fifth aspect, an embodiment of this application provides an SMF network element, including a unit or a module configured to implement the method provided in any one of the second aspect or the possible implementations of the second aspect.

According to a sixth aspect, an embodiment of this application provides a PCF network element, including a unit or a module configured to implement the method provided in any one of the third aspect or the possible implementations of the third aspect.

According to a seventh aspect, an embodiment of this application provides a first device, including a processor and a memory. The memory is configured to store program code. The processor is configured to invoke the program code stored in the memory, to perform the method provided in any one of the first aspect or the possible implementations of the first aspect.

According to an eighth aspect, an embodiment of this application provides an SMF network element, including a processor and a memory. The memory is configured to store program code. The processor is configured to invoke the program code stored in the memory, to perform the method provided in any one of the second aspect or the possible implementations of the second aspect.

According to a ninth aspect, an embodiment of this application provides a PCF network element, including a processor and a memory. The memory is configured to store program code. The processor is configured to invoke the program code stored in the memory, to perform the method provided in any one of the third aspect or the possible implementations of the third aspect.

According to a tenth aspect, an embodiment of this application provides a computer storage medium, including computer instructions. When the computer instructions run on an electronic device, the electronic device is caused to perform the method provided in any one of the possible implementations of the first aspect, the method provided in any one of the possible implementations of the second aspect, or the method provided in any one of the possible implementations of the third aspect.

According to an eleventh aspect, an embodiment of this application provides a computer program product. When the computer program product runs on a computer, the computer is caused to perform the method provided in any one of the possible implementations of the first aspect, the method provided in any one of the possible implementations of the second aspect, or the method provided in any one of the possible implementations of the third aspect.

According to a twelfth aspect, an embodiment of this application further provides a data processing method. The method is applied to a communication system, and the communication system includes user equipment, a UPF network element, an SMF network element, and an application server. The method includes:

The SMF network element obtains a flow identifier, a first data identifier included in a first data packet in a traffic flow identified by the flow identifier, a second data identifier included in a second data packet in the traffic flow identified by the flow identifier, a first quality of service QoS requirement parameter corresponding to the first data identifier, and a second QoS requirement parameter corresponding to the second data identifier that are from the user equipment or the application server;
the SMF network element generates, based on the flow identifier, the first data identifier, the second data identifier, the first QoS requirement parameter, and the second QoS requirement parameter, a processing rule corresponding to the flow identifier, where the processing rule indicates the UPF network element or the user equipment to perform, based on a data identifier, QoS flow mapping on a data packet in the traffic flow, and the processing rule includes the first data identifier, a QoS flow corresponding to the first data identifier, the second data identifier, and a QoS flow corresponding to the second data identifier;
the SMF network element sends, to the UPF network element or the user equipment, the processing rule corresponding to the flow identifier;
the application server sends the first data packet and the second data packet to the UPF network element, or the user equipment obtains the first data packet and the second data packet; and
the UPF network element or the user equipment performs, based on the first data identifier, the second data identifier, and the processing rule corresponding to the flow identifier, quality of service QoS flow mapping on the first data packet and the second data packet, so as to map the first data packet to a first QoS flow for bearing and map the second data packet to a second QoS flow for bearing.

According to a thirteenth aspect, an embodiment of this application further provides a communication system. The communication system includes user equipment, a UPF network element, an SMF network element, and an application server.

The SMF network element is configured to obtain a flow identifier, a first data identifier included in a first data packet in a traffic flow identified by the flow identifier, a second data identifier included in a second data packet in the traffic flow identified by the flow identifier, a first quality of service QoS requirement parameter corresponding to the first data identifier, and a second QoS requirement parameter corresponding to the second data identifier that are from the user equipment or the application server.

The SMF network element is further configured to generate, based on the flow identifier, the first data identifier, the second data identifier, the first QoS requirement parameter, and the second QoS requirement parameter, a processing rule corresponding to the flow identifier, where the processing rule indicates the UPF network element or the user equipment to perform, based on a data identifier, QoS flow mapping on a data packet in the traffic flow, and the processing rule includes the first data identifier, a QoS flow corresponding to the first data identifier, the second data identifier, and a QoS flow corresponding to the second data identifier.

The SMF network element is further configured to send, to the UPF network element or the user equipment, the processing rule corresponding to the flow identifier.

The application server is configured to send the first data packet and the second data packet to the UPF network element, or the user equipment is configured to obtain the first data packet and the second data packet.

The UPF network element or the user equipment is configured to perform, based on the first data identifier, the second data identifier, and the processing rule corresponding to the flow identifier, quality of service QoS flow mapping on the first data packet and the second data packet, so as to map the first data packet to a first QoS flow for bearing and map the second data packet to a second QoS flow for bearing.

It can be understood that, for beneficial effects of embodiments in the fourth aspect to the thirteenth aspect, refer to beneficial effects of the methods in the first aspect to the third aspect. Details are not described herein again.

### BRIEF DESCRIPTION OF DRAWINGS

FIG. 1 is a diagram of an architecture of a communication system according to an embodiment of this application;
FIG. 2 is a schematic flowchart of a data processing method according to an embodiment of this application;
FIG. 2a is a diagram of header data of an RTP packet;
FIG. 2b is a diagram of header data of an RTCP packet;
FIG. 3 is a schematic flowchart of another data processing method according to an embodiment of this application;
FIG. 4 is a schematic flowchart of another data processing method according to an embodiment of this application;
FIG. 5A and FIG. 5B are a schematic flowchart of interaction of a data processing method according to an embodiment of this application;
FIG. 6 is a diagram of a structure of a first device according to an embodiment of this application;
FIG. 7 is a diagram of a structure of an SMF network element according to an embodiment of this application;
FIG. 8 is a diagram of a structure of a PCF network element according to an embodiment of this application;
FIG. 9 is a diagram of a structure of another first device according to an embodiment of this application;
FIG. 10 is a diagram of a structure of another SMF network element according to an embodiment of this application; and
FIG. 11 is a diagram of a structure of another PCF network element according to an embodiment of this application.

### DESCRIPTION OF EMBODIMENTS

In the specification, claims, and accompanying drawings of this application, the terms "first", "second", "third", "fourth" and the like are intended to distinguish between different objects but do not indicate a particular order.

''A plurality of'' means two or more. "And/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

The following describes embodiments of this application with reference to the accompanying drawings.

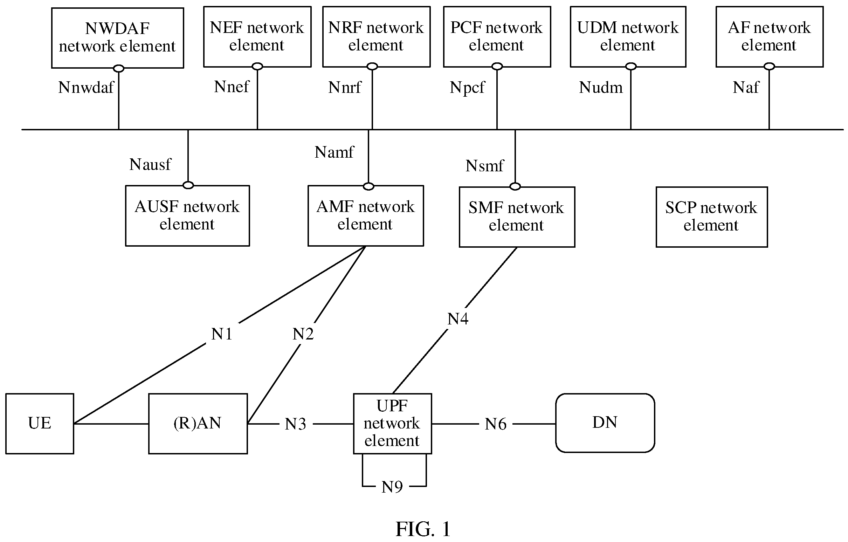

FIG. 1 is a diagram of an architecture of a communication system according to an embodiment of this application. The communication system is a diagram of a network architecture of a 5th generation mobile communication (5th Generation Mobile Networks, 5G) technology. The communication system includes two parts: a (radio) access network ((radio) access network, (R)AN), which is represented as a RAN device, and a core network (core network, CN). The RAN device is configured to provide a network access function for authorized user equipment (User Equipment, UE) in a specific area, and can use transmission tunnels of different quality based on a level of the UE, a service requirement, and the like. For example, the RAN device may manage a radio resource, and provide an access service for the UE, to complete forwarding of control information and/or data information between the UE and the CN.

For ease of understanding of embodiments of this application, an application scenario of embodiments of this application is first described in detail with reference to FIG. 1.
1. User equipment (user equipment, UE) may be referred to as a terminal device, a terminal, an access terminal, a subscriber unit, a subscriber station, a mobile station, a remote station, a remote terminal, a mobile device, a user terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an uncrewed aerial vehicle, a wearable device, a terminal device in a 5G network, a terminal device in an evolved public land mobile network (public land mobile network, PLMN), or the like. This is not limited in embodiments of this application.
2. An access network (access network, AN) provides a network access function for an authorized user in a specific area, and can use transmission tunnels with different quality based on a user level, a service requirement, and the like. The access network may be an access network using different access technologies. Currently, access network technologies include: a radio access network technology used in a 3rd generation (3rd generation, 3G) system, a radio access network technology used in a 4th generation (4th generation, 4G) system, or a next generation radio access network (next generation radio access network, NG-RAN) technology (for example, a radio access network technology used in a 5G system).

An access network that implements an access network function based on a wireless communication technology may be referred to as a radio access network (radio access network, RAN). The radio access network can manage a radio resource, and provide an access service for a terminal, to complete forwarding of a control signal and user data between the terminal and a core network.

The radio access network device may be, for example, a NodeB (NodeB), an evolved NodeB (evolved NodeB, eNB or eNodeB), a next generation node base station (next generation Node Base station, gNB) in a 5G mobile communication system, a base station in a future mobile communication system, or an access point (access point, AP) in a Wi-Fi wireless hotspot system, or may be a radio controller in a cloud radio access network (cloud radio access network, CRAN) scenario. Alternatively, the radio access network device may be a relay station, an access point, a vehicle-mounted device, an uncrewed aerial vehicle, a wearable device, a network device in a 5G network, a network device in an evolved PLMN, or the like. A specific technology and a specific device form that are used by the radio access network device are not limited in embodiments of this application.

3. An access management network element is mainly configured to perform mobility management and access management, is responsible for transferring a user policy and the like between user equipment and a PCF network element, and may be configured to implement a function, for example, an access authorization (authentication) function, other than session management in a mobility management entity (mobility management entity, MME) function.

In a 5G communication system, the access management network element may be an access and mobility management function (access and mobility management function, AMF) network element. In a future communication system, the access management network element may still be the AMF network element, or may have another name. This is not limited in this application.

4. A session management network element is mainly configured to manage a session, allocate and manage an internet protocol (Internet protocol, IP) address of user equipment, select an endpoint that can manage a user plane function interface and a policy control and charging function interface, perform downlink data communication, and the like.

In a 5G communication system, the session management network element may be an SMF network element. In a future communication system, the session management network element may still be the SMF network element, or may have another name. This is not limited in this application.

5. A user plane network element is configured to perform functions such as packet routing and forwarding, QoS handling of user plane data, user plane data forwarding, session/flow level-based charging statistics, and bandwidth limitation.

In a 5G communication system, the user plane network element may be a UPF network element. In a future communication system, the user plane network element may still be the UPF network element, or may have another name. This is not limited in this application.

6. A data network element is configured to provide a network for data transmission.

In a 5G communication system, the data network element may be a data network (data network, DN) element. In a future communication system, the data network element may still be the DN element, or may have another name. This is not limited in this application.

7. A policy control network element is configured to provide guidance on a unified policy framework for network behavior, provide policy rule information for a control plane function network element (for example, an AMF or SMF network element), and the like.

In a 4G communication system, the policy control network element may be a policy and charging rules function (policy and charging rules function, PCRF) network element. In a 5G communication system, the policy control network element may be a PCF network element. In a future communication system, the policy control network element may still be a PCF network element, or may have another name. This is not limited in this application.

8. A data management network element is configured to perform user equipment identification handling, access authentication, registration, mobility management, and the like.

In a 5G communication system, the data management network element may be a unified data management (unified data management, UDM) network element. In a 4G communication system, the data management network element may be a home subscriber server (home subscriber server, HSS) network element. In a future communication system, the data management network element may still be the UDM network element, or may have another name. This is not limited in this application.

9. A network exposure function (network exposure function, NEF) network element is configured to securely expose a service and a capability that are provided by a 3rd generation partnership project (3rd generation partnership project, 3GPP) network function.

10. An application function (application function, AF) network element provides an application layer service for UE. When providing a service for the UE, the AF has requirements on a QoS policy and a charging (charging) policy, and needs to notify a network. In addition, the AF also needs to obtain application-related information fed back by a core network. The AF may have all AF functions defined in the technical specification (technical specification, TS) 23.501 R-15, and have a related function for an application service. In other words, in a user plane architecture, an application server (application server, AS) and the UE perform user plane communication along a path of UE-RAN-UPF-AF. The AF may further communicate with another network function (network function, NF) network element in a 5G core network (5G core network, 5GC) in a control plane architecture through an NEF, for example, communicate with a PCF network element through the NEF network element. If the AF is deployed by an operator of the 5GC, the AF network element may alternatively directly communicate, in the control plane architecture, with another NF network element in the 5GC without using the NEF network element, for example, directly communicate with the PCF network element.

11. A network data analytics function (network data analytics function, NWDAF) network element may be configured to collect data from a network element, an AF, and an operation administration and maintenance (operation administration and maintenance, OAM) system, analyze the data by using solutions such as machine learning and artificial intelligence, and feed back the data to the network element, the AF, and the like for network or service configuration optimization, to provide better network quality and service experience.

12. A network repository function (network repository function, NRF) network element may be configured to provide a network element discovery function, and provide network element information corresponding to a network element type based on a request of another network element. The NRF network element further provides a network element management service, for example, network element registration, update, and deregistration, and network element status subscription and push.

13. An authentication server function (authentication server function, AUSF) network element is mainly responsible for authenticating a user, to determine whether to allow the user or a device to access the network.

14. A service communication proxy (service communication proxy, SCP) network element may be configured to perform direct/indirect communication of an NF, and a service request of the NF may be proxied by the SCP.

In FIG. 1, N1, N2, N3, N4, N6, N9, Nnwdaf, Nnef, Nnrf, Npcf, Nudm, Naf, Nausf, Namf, and Nsmf are interface sequence numbers. For meanings of the interface sequence numbers, refer to meanings defined in 3GPP TS 23.501.

It should be understood that the foregoing network architecture used in embodiments of this application is merely an example for description, and a network architecture applicable to embodiments of this application is not limited thereto. Any network architecture that can implement the functions of the foregoing network elements is applicable to embodiments of this application.

It should be further understood that the AMF network element, the SMF network element, the UPF network element, the NEF network element, the PCF network element, the UDM network element, the NWDAF network element, the NRF network element, the AUSF network element, the SCP network element, and the like shown in FIG. 1 may be understood as network elements configured to implement different functions in a core network, for example, may be combined into a network slice as required. These core network elements may be independent devices, or may be integrated into a same device to implement different functions. A specific form of the foregoing network elements is not limited in this application.

It should be further understood that the foregoing names are defined merely for distinguishing between different functions, and should not constitute any limitation on this application. This application does not exclude a possibility that another name is used in the 5G network and another future network. For example, in a 6G network, some or all of the foregoing networks may still use terms in 5G, or may use other names. A name of an interface between the network elements in FIG. 1 is merely an example. In specific implementation, the name of the interface may be another name. This is not specifically limited in this application. In addition, names of messages (or signaling) transmitted between the foregoing network elements are merely examples, and do not constitute any limitation on functions of the messages.

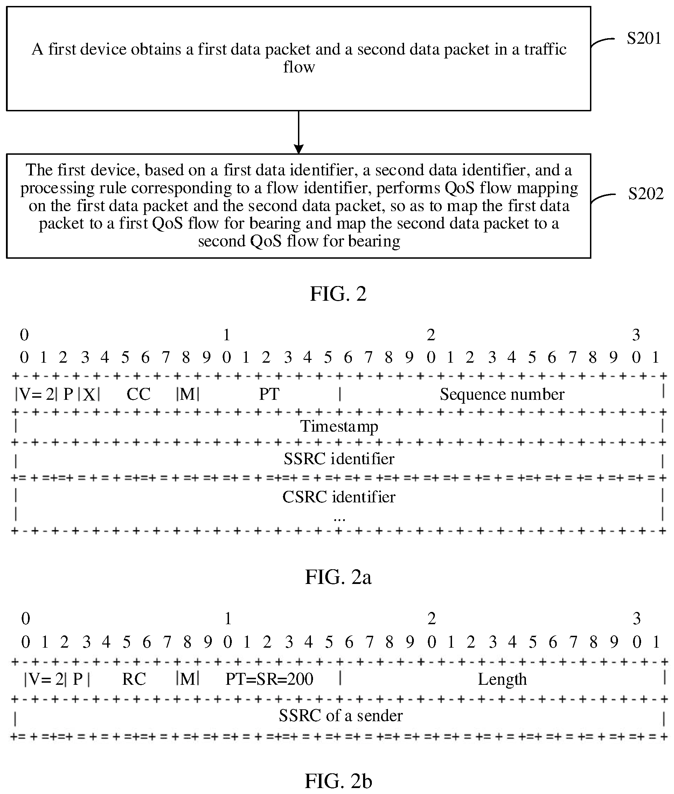

FIG. 2 is a schematic flowchart of a data processing method according to an embodiment of this application. The method is applied to a first device, and the first device is a UPF network element or a user equipment in the 5G system shown in FIG. 1. As shown in FIG. 2, the method includes the following steps.

S201: The first device obtains a first data packet and a second data packet in a traffic flow.

The traffic flow includes one or more data packets. The first data packet and the second data packet are data packets included in the same traffic flow. The first data packet includes a flow identifier and a first data identifier, and the second data packet includes the flow identifier and a second data identifier. The flow identifier identifies the traffic flow. Optionally, the flow identifier is an IP 5-tuple, an IP 3-tuple, a ToS of an IPv4 header, a flow label (flow label) of an IPv6 header, or the like. The IP 5-tuple includes a source IP address, a source port, a destination IP address, a destination port, and a transport layer protocol. The IP 3-tuple includes a destination IP address, a destination port number, and a protocol.

In an example, the data packet in the traffic flow may be one or more of an audio data packet, a video data packet, a haptic data packet, an RTP data packet, an RTCP data packet, or the like.

Optionally, a data identifier is an SSRC identifier, a payload type identifier, or a data type identifier indicating that the data packet is an RTP packet or an RTCP packet.

It should be noted herein that there are two sources of the traffic flow: from an application layer of user equipment and from an application server. A traffic flow from the application layer of the user equipment is an uplink traffic flow, and a traffic flow from the application server is a downlink traffic flow.

S202: The first device performs, based on the first data identifier, the second data identifier, and a processing rule corresponding to the flow identifier, QoS flow mapping on the first data packet and the second data packet, so as to map the first data packet to a first QoS flow for bearing and map the second data packet to a second QoS flow for bearing.

The processing rule includes a data identifier of a data packet in the traffic flow and a QoS flow identifier corresponding to the data identifier.

That the first device performs, based on the first data identifier, the second data identifier, and the processing rule corresponding to the flow identifier, QoS flow mapping on the first data packet and the second data packet is specifically: adding an identifier of the first QoS flow to the first data packet, and adding an identifier of the second QoS flow to the second data packet, or bearing the first data packet in a first QoS flow for transmission, and bearing the second data packet in a second QoS flow for transmission. The first data identifier corresponds to the identifier of the first QoS flow, and the second data identifier corresponds to the identifier of the second QoS flow.

In this manner, the data packet in the traffic flow can be mapped to a corresponding QoS flow based on the data identifier, so that corresponding QoS handling is performed on the data packet in the traffic flow.

It should be understood that data packets belonging to a same traffic flow have a same flow identifier. For example, information such as an IP 5-tuple and an IP 3-tuple carried in these data packets is the same. For example, the traffic flow includes the first data packet and the second data packet. The first data packet includes the flow identifier and the first data identifier, and the second data packet includes the flow identifier and the second data identifier. The first data packet and the second data packet have different QoS requirements. The first data identifier corresponds to the identifier of the first QoS flow, and the second data identifier corresponds to the identifier of the second QoS flow. In other words, the identifier of the first QoS flow is added to the first data packet, and the identifier of the second QoS flow is added to the second data packet, that is, the first data packet is mapped to the first QoS flow, and the second data packet is mapped to the second QoS flow, so that corresponding QoS handling is performed on the first data packet and the second data packet. Specifically, a QoS flow identifier may be added to a general packet radio service tunneling protocol-user plane (general packet radio service tunneling protocol-user plane) GTP-U layer or a service data adaptation protocol (service data adaptation protocol, SDAP) layer of a data packet.

In a possible embodiment, the first device obtains the processing rule corresponding to the flow identifier. The processing rule includes a data identifier of each data packet in the traffic flow and a QoS flow identifier corresponding to the data identifier. One or more data identifiers correspond to one QoS flow identifier. The processing rule of the traffic flow indicates the UPF network element or the user equipment to perform, based on the data identifier, QoS flow mapping on the data packet in the traffic flow.

It should be noted herein that, for the user equipment, the processing rule is a QoS rule, and for the UPF network element, the processing rule is an N4 rule.

That the first device obtains the processing rule of the traffic flow is specifically: obtaining the processing rule of the traffic flow based on the flow identifier of the traffic flow. In other words, the processing rule of the traffic flow refers to that the processing rule of the traffic flow is to perform data detection and QoS mapping on the data packet in the traffic flow, or the processing rule of the traffic flow includes description information of the traffic flow, for example, the flow identifier. Specifically, the flow identifier may be an IP 3-tuple, an IP 5-tuple, a ToS of an IPv4 header, a flow label (Flow label) of an IPv6 header, or the like. This may also be understood as that a correspondence exists between the processing rule and the flow identifier. In an example, the processing rule includes a flow identifier. The first device matches the flow identifier of the data packet with the flow identifier in the processing rule, and determines, as the processing rule of the traffic flow, a processing rule having a matched flow identifier. In another example, the first device obtains a table of the correspondence between the processing rule and the flow identifier. The first device traverses, based on the flow identifier of the data packet, the table of the correspondence between the processing rule and the flow identifier to obtain a processing rule corresponding to the flow identifier of the data packet, and determines the processing rule as the processing rule of the traffic flow.

In a possible implementation, the processing rule indicates that the data identifier of the data packet is an SSRC identifier or a payload type identifier. It should be noted that the data packet included in the traffic flow is an RTP data packet, and the data identifier of the data packet is in a header of the RTP data packet. The first device distinguishes between data packets based on SSRC identifiers or payload type identifiers of the data packets, to determine QoS requirements of the data packets.

In a possible implementation, the processing rule indicates that the data identifier of the data packet is a data type identifier indicating that the data packet is an RTP data packet or an RTCP data packet. The traffic flow includes the RTCP data packet and the RTP data packet. The first device distinguishes, based on the data type identifier of the data packet, whether the data packet is an RTCP data packet or an RTP data packet. In an example, when the data type identifier of the data packet includes a payload type (payload type, PT) identifier and an M field, the first device determines, based on the payload type identifier and the M field, that the data packet is an RTP data packet. The payload type identifier and the M field occupy eight bits in the header of the RTP data packet, the payload type identifier occupies seven bits, and the M field occupies one bit, as shown in FIG. 2a. The first device determines, based on a value of the eight bits, that the data packet is an RTP data packet. When the data type identifier of the data packet includes only a data packet type (packet type, PT) identifier, the first device determines that the data packet is an RTCP data packet. The data packet type identifier occupies eight bits in a header of the RTCP data packet, as shown in FIG. 2b. The first device determines, based on a value of the eight bits, that the data packet is an RTCP data packet. It should be noted that a PT in FIG. 2a is a payload type, and a PT in FIG. 2b is a data packet type.

The payload type identifier and the M field in the RTP data packet and the data packet type identifier in the RTCP data packet are at a same location in the data packet, and both occupy eight bits. The first device determines, based on the value of the eight bits, that the data packet is an RTP data packet or an RTCP data packet.

In a possible implementation, the processing rule
indicates that the data identifier of the data packet includes an identifier indicating that the data packet is an RTP data packet and an SSRC identifier of the data packet; or
indicates that the data identifier of the data packet includes an identifier indicating that the data packet is an RTP data packet and a payload type identifier of the data packet; or
indicates that the data identifier of the data packet is an identifier indicating that the data packet is an RTCP data packet.

In a scenario of this implementation, when a traffic flow includes both an RTP data packet and an RTCP data packet, and different RTP data packets correspond to different QoS requirements, the first device determines types of data packets (the RTP data packet and the RTCP data packet) in the traffic flow based on data identifiers of the data packets in the traffic flow, and maps the RTCP data packet to a corresponding QoS flow, to ensure that the RTCP data packet meets a corresponding QoS requirement. For RTP data packets corresponding to different QoS requirements, the first device further determines, based on SSRC identifiers or payload type identifiers in data identifiers of the RTP data packets, a third QoS flow corresponding to a first RTP data packet, and maps the first RTP data packet to the third QoS flow corresponding to an SSRC identifier or a payload type identifier of the first RTP data packet. In addition, the first device further determines, based on the SSRC identifiers or the payload type identifiers carried in the data identifiers of the RTP data packets, a fourth QoS flow corresponding to a second RTP data packet, and maps the second RTP data packet to the fourth QoS flow corresponding to an SSRC identifier or a payload type identifier of the second RTP data packet.

It should be noted that, that the RTP data packets correspond to different QoS requirement parameters means that different RTP data packets have different QoS requirements. The RTP data packets may be data packets of a same type. For example, all the RTP data packets are video data packets. Alternatively, the RTP data packets are data packets of different types. For example, the first RTP data packet may be a video data packet, and the second RTP data packet is an audio data packet. Alternatively, some RTP data packets in RTP data packets of a same type correspond to different QoS requirements. For example, the first RTP data packet is a first video data packet, the second RTP data packet is a second video data packet, the third RTP data packet is an audio data packet, and so on. The second RTP data packet, the second RTP data packet, and the third RTP data packet respectively correspond to different QoS requirements.

It should be noted that, for a data packet of an RTP data packet type, a data identifier of the data packet has two forms: The data identifier includes a payload type identifier, an M field, and an SSRC identifier, where the payload type identifier and the M field identify that the data packet is an RTP data packet, that is, the data packet is determined to be an RTP data packet based on values corresponding to the payload type identifier and the M field, and the SSRC identifier further identifies the data packet within a range of the RTP data packet, to determine a QoS requirement or a QoS flow corresponding to the RTP data packet; and the data identifier includes a payload type identifier and an M field, where the payload type identifier and the M field identify that the data packet is an RTP data packet, that is, the data packet is determined to be an RTP data packet based on values corresponding to the payload type identifier and the M field, and the payload type identifier further identifies the data packet within a range of the RTP data packet, to determine a QoS requirement or a QoS flow corresponding to the RTP data packet.

In a possible implementation, the processing rule is generated based on the data identifier and a QoS requirement parameter corresponding to the data identifier. The QoS requirement parameter may be a specific QoS parameter, for example, a bandwidth, a delay, a packet loss rate, or a transmission priority.

In a possible implementation, the processing rule is from an SMF network element.

In an example, the SMF network element obtains the flow identifier of the traffic flow and a plurality of PCC rules. One PCC rule includes at least one data identifier, a corresponding QoS requirement parameter, and the flow identifier of the traffic flow. It should be understood that data identifiers included in one PCC rule correspond to a same QoS requirement parameter. The SMF network element generates the processing rule of the traffic flow based on the flow identifier of the traffic flow and the plurality of PCC rules. The PCC rules are generated by a PCF network element based on at least one data identifier and a QoS requirement parameter corresponding to each data identifier that are from the user equipment or the application server. It should be understood that the flow identifier of the traffic flow is from the user equipment or the application server, and is forwarded by the PCF network element to the SMF network element. The PCC rule includes the flow identifier, and is used to specify that QoS handling corresponding to the QoS requirement parameter needs to be performed on a data packet that carries the data identifier in the current traffic flow. In another example, the SMF network element obtains, from the PCF network element, at least one data identifier, a QoS requirement parameter corresponding to each data identifier, and the flow identifier of the traffic flow that are from the user equipment or an application function (application function, AF) network element, and the SMF network element generates the processing rule of the traffic flow based on the at least one data identifier, the QoS requirement parameter corresponding to each data identifier, and the flow identifier of the traffic flow that are from the user equipment or the application function network element. Optionally, the user equipment directly sends at least one data identifier, a QoS requirement parameter corresponding to each data identifier, and the flow identifier of the traffic flow to the SMF network element. Specifically, the user equipment sends the foregoing information to an AMF network element, and the AMF network element forwards the information to the SMF network element.

It should be understood that, when data packets having a same QoS requirement exist in a plurality of traffic flows, one PCC rule includes a plurality of flow identifiers.

It should be noted that the user equipment herein may be a communication module (modem) of the user equipment.

In a possible implementation, when the first device is a user equipment, the method in this embodiment further includes:
The user equipment sends the at least one data identifier, the QoS requirement parameter corresponding to each of the at least one data identifier, and the flow identifier of the traffic flow to the PCF network element or the SMF network element.

Specifically, an application layer of the user equipment sends an AT command to the communication module of the user equipment, where the AT command is used to request to perform differentiated QoS handling on a data packet in the traffic flow, and the AT command includes the at least one data identifier, the QoS requirement parameter corresponding to each of the at least one data identifier, and the flow identifier of the traffic flow. It should be understood that a data identifier included in the AT command is a data identifier of a data packet in the traffic flow. When the communication module of the user equipment receives the AT command, the communication module of the user equipment determines whether the communication module of the user equipment supports a capability of performing differentiated QoS handling based on a data identifier of a data packet. If the communication module of the user equipment determines that the communication module of the user equipment supports the capability of performing differentiated QoS handling based on a data identifier of a data packet, the communication module of the user equipment sends the at least one data identifier, the QoS requirement parameter corresponding to each data identifier, and the flow identifier of the traffic flow to the PCF network element or the SMF network element, to request a network side to provide a corresponding QoS requirement for a data packet that is in the traffic flow and that corresponds to each data identifier.

It can be learned that, in the solution of this embodiment, a data identifier carried in a data packet in the traffic flow is detected, different data packets in the same traffic flow are distinguished based on data identifiers, and the data packets are mapped to QoS flows corresponding to different QoS requirement parameters, so that corresponding QoS handling is performed on the different data packets in the same traffic flow.

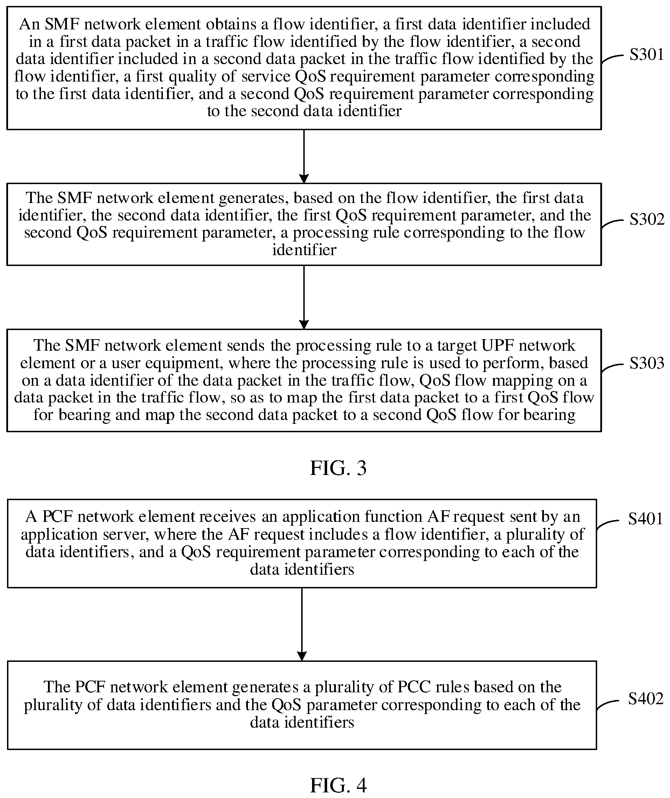

FIG. 3 is a schematic flowchart of another data processing method according to an embodiment of this application. The method is applied to the SMF network element in FIG. 1. The method includes the following steps.

S301: The SMF network element obtains a flow identifier, a first data identifier included in a first data packet in a traffic flow identified by the flow identifier, a second data identifier included in a second data packet in the traffic flow identified by the flow identifier, a first quality of service QoS requirement parameter corresponding to the first data identifier, and a second QoS requirement parameter corresponding to the second data identifier.

The QoS requirement parameter may be a specific QoS parameter, for example, a bandwidth, a delay, a packet loss rate, or a transmission priority.

In an example, the SMF network element obtains a plurality of PCC rules from a PCF network element. Each PCC rule includes at least one data identifier, a corresponding QoS requirement parameter, and the flow identifier of the traffic flow. It should be understood that data identifiers included in one PCC rule correspond to a same QoS requirement parameter. The PCC rules are generated by the PCF network element based on at least one data identifier and a QoS requirement parameter corresponding to each data identifier that are from user equipment or an application server. It should be understood that the flow identifier of the traffic flow is from the user equipment or the application server, and is sent by the PCF network element to the SMF network element by using the PCC rules.

In another example, the SMF network element obtains, from the PCF network element, the at least one data identifier, the QoS requirement parameter corresponding to each data identifier, and the flow identifier of the traffic flow that are from the user equipment or the application server.

Optionally, the user equipment directly sends the at least one data identifier, the QoS requirement parameter corresponding to each data identifier, and the flow identifier of the traffic flow to the SMF network element. In other words, the at least one data identifier, the QoS requirement parameter corresponding to each data identifier, and the flow identifier of the traffic flow that are obtained by the SMF network element are from the user equipment and transmitted through an access network device and an AMF network element.

S302: The SMF network element generates, based on the flow identifier, the first data identifier, the second data identifier, the first QoS requirement parameter, and the second QoS requirement parameter, a processing rule corresponding to the flow identifier.

In a feasible implementation, the SMF network element generates the processing rule of the traffic flow based on the received PCC rules. In another feasible implementation, the SMF network element generates, based on the received flow identifier, first data identifier, second data identifier, first QoS requirement parameter, and second QoS requirement parameter, the processing rule corresponding to the flow identifier. In another feasible implementation, the SMF network element generates the processing rule of the traffic flow based on at least one preconfigured data identifier, a QoS requirement parameter corresponding to each data identifier, and the flow identifier of the traffic flow.

The processing rule of the traffic flow includes a data identifier of each data packet in the traffic flow and a QoS flow identifier corresponding to the data identifier. One or more data identifiers correspond to one QoS flow identifier. The processing rule of the traffic flow indicates a UPF network element or the user equipment to perform, based on the data identifier, QoS flow mapping on the data packet in the traffic flow, that is, add, to the data packet based on the data identifier carried in the data packet in the traffic flow, a QoS flow identifier corresponding to the data identifier.

In the foregoing manner, the SMF network element can obtain a plurality of processing rules, and the plurality of processing rules correspond to the traffic flow.

In an example, each of the plurality of processing rules includes a flow identifier of a corresponding traffic flow. In another example, the SMF network element generates a table of a correspondence between processing rules and flow identifiers based on a correspondence between a plurality of processing rules and a plurality of traffic flows.

In a possible implementation, the processing rule indicates that the data identifier of the data packet is an SSRC identifier or a payload type identifier. It should be noted that the data packet included in the traffic flow is an RTP data packet, and the data identifier of the data packet is in a header of the RTP data packet. The user equipment or a target UPF network element distinguishes between data packets based on SSRC identifiers or payload type identifiers of the data packets, to determine QoS requirements of the data packets.

In a possible implementation, the processing rule indicates that the data identifier of the data packet is a data type identifier indicating that the data packet is an RTP data packet or an RTCP data packet. The traffic flow includes the RTCP data packet and the RTP data packet. The user equipment or the target UPF network element distinguishes, based on the data type identifier of the data packet, whether the data packet is an RTCP data packet or an RTP data packet. In an example, when the data type identifier of the data packet includes a payload type identifier and an M field, the user equipment or the target UPF network element determines, based on the payload type identifier and the M field, that the data packet is an RTP data packet. The payload type identifier and the M field occupy eight bits in the header of the RTP data packet, the payload type PT identifier occupies seven bits, and the M field occupies one bit. The user equipment or the target UPF network element determines, based on a value corresponding to the eight bits, that the data packet is an RTP data packet. When the data type identifier of the data packet includes only a data packet type identifier, the user equipment or the target UPF network element determines, based on the data packet type identifier, that the data packet is an RTCP data packet. The data packet type identifier occupies eight bits in a header of the RTCP data packet. The user equipment or the target UPF network element determines, based on a value corresponding to the eight bits, that the data packet is an RTCP data packet. The payload type identifier and the M field in the RTP data packet and a field of the data packet type identifier in the RTCP data packet are at a same location in the data packet. The first device determines, based on the value of the eight bits, that the data packet is an RTP data packet or an RTCP data packet.

In a possible implementation, the processing rule
indicates that the data identifier of the data packet includes an identifier indicating that the data packet is an RTP data packet and an SSRC identifier of the data packet; or
indicates that the data identifier of the data packet includes an identifier indicating that the data packet is an RTP data packet and a payload type identifier of the data packet; or
indicates that the data identifier of the data packet is an identifier indicating that the data packet is an RTCP data packet.

In a scenario of this implementation, when a traffic flow includes both an RTP data packet and an RTCP data packet, and there are a plurality of RTP data packets, the user equipment or the target UPF network element determines types of data packets (the RTP data packet and the RTCP data packet) in the traffic flow based on data identifiers of the data packets in the traffic flow, and maps the RTCP data packet to a corresponding QoS flow, to ensure that the RTCP data packet meets a corresponding QoS requirement. For the plurality of RTP data packets, the user equipment or the target UPF network element further determines, based on SSRC identifiers or payload type identifiers carried in the RTP data packets, QoS flows corresponding to the RTP data packets, and maps the RTP data packets to the QoS flows corresponding to the SSRC identifiers or the payload type identifiers of the RTP data packets.

It should be noted that, for a data packet of an RTP data packet type, a data identifier of the data packet has two forms: The data identifier includes a payload type identifier, an M field, and an SSRC identifier, where the payload type identifier and the M field identify that the data packet is an RTP data packet, that is, the data packet is determined to be an RTP data packet based on values corresponding to the payload type identifier and the M field, and the SSRC identifier further identifies the data packet within a range of the RTP data packet; and the data identifier includes a payload type identifier and an M field, where the payload type identifier and the M field identify that the data packet is an RTP data packet, that is, the data packet is determined to be an RTP data packet based on values corresponding to the payload type identifier and the M field, and the payload type identifier further identifies the data packet within a range of the RTP data packet.

S303: The SMF network element sends the processing rule to the target UPF network element or the user equipment, where the processing rule is used to perform, based on a data identifier of a data packet in the traffic flow, QoS flow mapping on data packets in the traffic flow, so as to map the first data packet to a first QoS flow for bearing and map the second data packet to a second QoS flow for bearing.

In an example, the processing rule includes a flow identifier of a corresponding traffic flow, and the SMF network element only needs to send the processing rule to the target UPF network element or the user equipment.

In another example, the processing rule does not include a flow identifier of a corresponding traffic flow, and the SMF network element further needs to send a table of a correspondence between the processing rule and the flow identifier to the target UPF network element or the user equipment.

Optionally, there may be a plurality of UPF network elements in a 5GS network. Some UPF network elements do not support a capability of performing differentiated QoS handling on a data packet based on a data identifier of the data packet, and some UPF network elements support the capability of performing differentiated QoS handling on a data packet based on a data identifier of the data packet. The SMF network element obtains, from the plurality of UPF network elements, a UPF network element that supports the capability of performing differentiated QoS handling on a data packet based on a data identifier of the data packet, and uses the UPF network element as the target UPF network element. Specifically, supporting the capability of performing differentiated QoS handling on a data packet based on a data identifier of the data packet mainly refers to a capability of identifying the data identifier in the data packet and mapping the data packet to a corresponding QoS flow based on the data identifier, or merely refers to a capability of identifying the data identifier in the data packet. It should be noted herein that, for the user equipment, the processing rule is a QoS rule, and for the UPF network element, the processing rule is an N4 rule.

It can be learned that, in the solution of this embodiment, the SMF generates the processing rule of the traffic flow based on the data identifier and the QoS requirement corresponding to the data identifier, and sends the processing rule of the traffic flow to the user equipment or the UPF network element, so that corresponding QoS handling is performed on different data packets in the same traffic flow based on data identifiers.

FIG. 4 is a schematic flowchart of another data processing method according to an embodiment of this application. The method is applied to the PCF network element in FIG. 1. The method includes the following steps.

S401: The PCF network element receives an application function AF request sent by an application server, where the AF request includes a flow identifier, a plurality of data identifiers, and a QoS requirement parameter corresponding to each data identifier.

The AF request is used to request to perform differentiated QoS handling on a data packet in a traffic flow. The flow identifier indicates the traffic flow, and may be specifically description information of the traffic flow, for example, an IP 3-tuple, an IP 5-tuple, a type of service ToS of an IPv4 header, and a flow label (Flow Label) of an IPv6 header. The QoS requirement parameter may be a specific QoS parameter, for example, a bandwidth, a delay, a packet loss rate, or a transmission priority.

The PCF network element sends a response message for the AF request to the application server. If the PCF network element supports a capability of performing differentiated QoS handling on a data packet in a traffic flow based on a data identifier of the data packet, the response message indicates that the PCF network element can meet a requirement of performing differentiated QoS handling on the data packet in the traffic flow based on the data identifier of the data packet. If the PCF network element does not support the capability of performing differentiated QoS handling on a data packet in a traffic flow based on a data identifier of the data packet, the response message carries error indication information. The error indication information indicates that the PCF network element does not support the capability of performing differentiated QoS handling on a data packet in a traffic flow based on a data identifier of the data packet. That the PCF network element does not support the capability of performing differentiated QoS handling on a data packet in a traffic flow based on a data identifier of the data packet means that a network in which the PCF network element is located does not support the capability of performing differentiated QoS handling on a data packet in a traffic flow based on a data identifier of the data packet, or in a network in which the PCF network element is located, a UPF network element or UE does not support the capability of performing differentiated QoS handling on a data packet in a traffic flow based on a data identifier of the data packet. For a specific meaning of supporting the capability of performing differentiated QoS handling on a data packet in a traffic flow based on a data identifier of the data packet, refer to the foregoing explanation in S302.

S402: The PCF network element generates a plurality of PCC rules based on the plurality of data identifiers and the QoS requirement parameter corresponding to each data identifier.

Each PCC rule includes at least one data identifier corresponding to a same QoS requirement parameter and the corresponding QoS requirement parameter. In addition, the PCC rule further includes the flow identifier. The plurality of PCC rules are used to generate a processing rule. The processing rule includes the flow identifier of the traffic flow, the processing rule includes the plurality of data identifiers and a QoS flow identifier corresponding to each data identifier, and the processing rule indicates the UPF network element or the user equipment to perform, based on a data identifier, QoS flow mapping on a data packet in the traffic flow.

In a possible implementation, the processing rule indicates that the data identifier of the data packet is an SSRC identifier or a payload type identifier. It should be noted that the data packet included in the traffic flow is an RTP data packet, and the data identifier of the data packet is in a header of the RTP data packet. The UPF network element or the user equipment distinguishes between data packets based on SSRC identifiers or payload type identifiers of the data packets, to determine QoS requirements of the data packets. The processing rule further includes the flow identifier of the traffic flow, that is, flow description information. The processing rule indicates the UPF network element or the user equipment to determine, based on the flow identifier/the flow description information, that the RTP data packet is a data packet in the traffic flow, and further map the data packet to a corresponding QoS flow based on a data identifier.

In a possible implementation, the processing rule indicates that the data identifier of the data packet is a data type identifier indicating whether the data packet is an RTP data packet or an RTCP data packet. The data type identifier is used to distinguish whether the data packet is an RTP data packet or an RTCP data packet, and may specifically refer to a value or a range of a value corresponding to eight bits occupied by a payload type identifier and an M field in the header of the RTP data packet, and/or a value or a range of a value corresponding to eight bits occupied by a data packet type in a header of the RTCP data packet. The traffic flow includes the RTCP data packet and the RTP data packet. The UPF network element or the user equipment distinguishes, based on the data type identifier of the data packet, whether the data packet is an RTCP data packet or an RTP data packet, that is, determines, based on the value corresponding to the eight bits occupied by the payload type identifier and the M field in the header of the RTP data packet in the data packet or the value corresponding to the eight bits occupied by the data packet type identifier in the header of the RTCP data packet, that the data packet is an RTP data packet or an RTCP data packet. In an example, if the data type identifier indicates that the data packet is an RTP data packet or RTCP data packet, when the value of the eight bits corresponding to the data type identifier is a preset value or is within a preset range, it indicates that the data packet carrying the eight bits is an RTP data packet; otherwise, the data packet carrying the eight bits is an RTCP data packet. When the value of the eight bits corresponding to the data type identifier of the data packet represents the payload type identifier and the M field, the UPF network element or the user equipment determines that the data packet is an RTP data packet. The payload type identifier and the M field occupy the eight bits in the header of the RTP data packet, the payload type identifier occupies seven bits, and the M field occupies one bit. When the value of the eight bits corresponding to the data type identifier of the data packet represents the data packet type identifier, the UPF network element or the user equipment determines that the data packet is an RTCP data packet. The data packet PT identifier occupies the eight bits in the header of the RTCP data packet.

In a possible implementation, the processing rule
indicates that the data identifier of the data packet includes an identifier indicating that the data packet is an RTP data packet and an SSRC identifier of the data packet; or
indicates that the data identifier of the data packet includes an identifier indicating that the data packet is an RTP data packet and a payload type identifier of the data packet; or
indicates that the data identifier of the data packet is an identifier indicating that the data packet is an RTCP data packet.

In a scenario of this implementation, when a traffic flow includes both an RTP data packet and an RTCP data packet, and there are a plurality of RTP data packets, the user equipment or the UPF network element determines types of data packets (the RTP data packet and the RTCP data packet) in the traffic flow based on data identifiers of the data packets in the traffic flow, and maps the RTCP data packet to a corresponding QoS flow, to ensure that the RTCP data packet meets a corresponding QoS requirement. For the plurality of RTP data packets, the user equipment or the target UPF network element further determines, based on SSRC identifiers or payload type identifiers carried in the RTP data packets, QoS flows corresponding to the RTP data packets, and maps the RTP data packets to the QoS flows corresponding to the SSRC identifiers or the payload type identifiers of the RTP data packets.

It should be noted that, for a data packet of an RTP data packet type, a data identifier of the data packet has two forms: The data identifier includes a payload type identifier, an M field, and an SSRC identifier, where the payload type identifier and the M field identify that the data packet is an RTP data packet, that is, the data packet is determined to be an RTP data packet based on values corresponding to the payload type identifier and the M field, and the SSRC identifier further identifies the data packet within a range of the RTP data packet; and the data identifier includes a payload type identifier and an M field, where the payload type identifier and the M field identify that the data packet is an RTP data packet, that is, the data packet is determined to be an RTP data packet based on values corresponding to the payload type identifier and the M field, and the payload type identifier further identifies the data packet within a range of the RTP data packet.

When obtaining the plurality of PCC rules, the PCF network element sends the plurality of PCC rules to an SMF network element, so that the SMF network element generates the processing rule of the traffic flow based on the plurality of PCC rules and the flow identifier of the traffic flow. It should be noted herein that, for the user equipment, the processing rule is a QoS rule; and for the UPF network element, the processing rule is an N4 rule, and specifically includes a data packet detection rule PDR (Packet Detection Rule) and a QoS enforcement rule (QoS enforcement rule, QER).

It should be understood that S402 is performed in a case that the PCF network element supports the capability of performing differentiated QoS handling on a data packet in a traffic flow based on a data identifier of the data packet.

It can be learned that, in the solution of this embodiment, the PCF network element generates the plurality of PCC rules based on the plurality of data identifiers and the QoS requirement parameter corresponding to each data identifier, and sends the plurality of PCC rules to an SMF network element, so that the SMF network element generates the processing rule of the traffic flow based on the plurality of PCC rules, and sends the processing rule of the traffic flow to the user equipment or the UPF network element, so that corresponding QoS handling is performed on different data packets in the same traffic flow based on data identifiers.

It should be understood that the flow identifier in this application has two meanings. One is used to distinguish between traffic flows, and the other is used to determine whether corresponding QoS handling is performed on a data packet in a traffic flow. For example, the data packet carries a flow identifier and a data identifier. After obtaining the data packet, the UPF network element or a communication module of the user equipment determines, based on the flow identifier in the data packet, whether the data packet belongs to a traffic flow on which corresponding QoS handling is performed on the data packet. If the data packet belongs to the traffic flow, the UPF network element or the communication module of the user equipment performs corresponding QoS handling on the data packet based on the data identifier in the data packet.

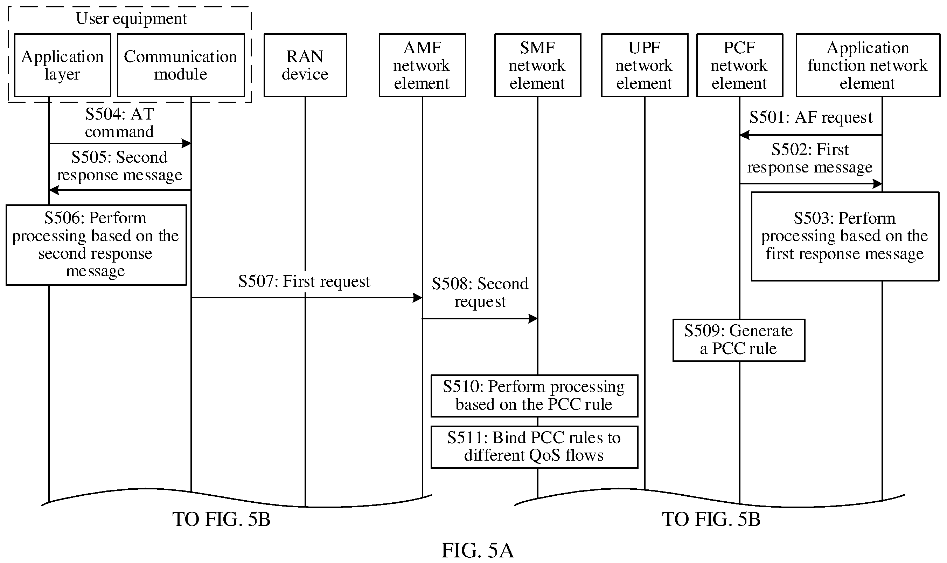

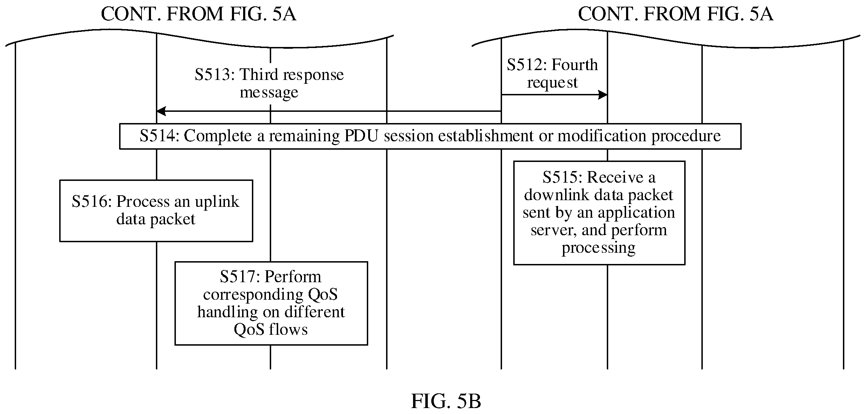

FIG. 5A and FIG. 5B are a schematic flowchart of interaction of a data processing method according to an embodiment of this application. The method is applied to the system shown in FIG. 1. As shown in FIG. 5A and FIG. 5B, the method includes the following steps.

S501: An application function network element sends an AF request to a PCF network element.

The AF request is used to perform differentiated QoS handling on data packets in a same traffic flow. The AF request includes a flow identifier, at least one data identifier, and a QoS requirement parameter corresponding to each data identifier. The flow identifier indicates a traffic flow, that is, flow description information, and may be specifically an IP 3-tuple, an IP 5-tuple, a ToS of an IPv4 header, a flow label of an IPv6 header, or the like.

In an example, the AF request includes a flow identifier, a plurality of groups of data identifiers, and a QoS requirement parameter corresponding to each group of data identifiers, and each group of data identifiers includes one or more data identifiers.

In an example, the AF request includes a flow identifier, a plurality of data identifiers, and a QoS requirement parameter corresponding to each data identifier.

It should be understood that the data identifiers and the QoS requirement parameter corresponding to each data identifier that are carried in the AF request implicitly indicate the PCF network element to perform corresponding QoS handling on data packets in the traffic flow based on the data identifiers.

Optionally, the AF request further includes indication information. The indication information indicates the PCF network element to perform corresponding QoS handling on the data packets in the traffic flow based on the data identifiers, or indicates a 5GS to perform corresponding QoS handling on the data packets in the traffic flow based on the data identifiers.

Specifically, the application function network element may be specifically an AF network element in an application server. In other words, the application function network element may be a part of functions or a part of the application server. Alternatively, the application function network element is a functional network element outside the application server. This is not limited herein. When the AF network element is in a trusted domain, the AF network element directly sends the AF request to the PCF network element by invoking a service interface of the PCF network element. In an example, the service interface of the PCF network element is an Npcf_PolicyAuthorization service interface. When the AF network element is in an untrusted domain, the AF network element needs to send the AF request to the PCF network element through an NEF network element. The AF network element invokes a service interface of the NEF network element to send the AF request to the NEF network element. In an example, the service interface of the NEF network element is an Nnef_AFSessionWithQoS service interface. The NEF network element invokes the service interface of the PCF network element to send the AF request to the PCF network element.

S502: The PCF network element sends a first response message to the application function network element.

The first response message is used to respond to a first request.

When the PCF network element or the NEF network element determines, based on a configuration of the PCF network element or the NEF network element or awareness of a 5GS capability, that a current 5GS network does not support a capability of performing differentiated QoS handling on data packets in a same traffic flow based on data identifiers, or the current 5GS network cannot distinguish between different QoS requirements of different data packets in a same traffic flow based on data identifiers, the first response message carries error indication information. The error indication information indicates that the current 5GS network does not support the capability of performing differentiated QoS handling on data packets in a same traffic flow based on data identifiers, or the current 5GS network cannot distinguish between different QoS requirements of different data packets in a same traffic flow based on data identifiers. Specifically, supporting a capability of performing differentiated QoS handling on a data packet based on a data identifier of the data packet mainly refers to a capability of identifying the data identifier in the data packet and mapping the data packet to a corresponding QoS flow based on the data identifier, or merely refers to a capability of identifying the data identifier in the data packet. When the PCF network element or the NEF network element determines, based on the configuration of the PCF network element or the NEF network element or the awareness of the 5GS capability, that the current 5GS network supports the capability of performing differentiated QoS handling on data packets in a same traffic flow based on data identifiers, or the current 5GS network can distinguish between different QoS requirements of different data packets in a same traffic flow based on data identifiers, the first response message indicates that differentiated QoS handling can be performed on the data packets in the same traffic flow.

Optionally, the current 5GS network herein includes at least the PCF network element, an SMF network element, a UPF network element, the NEF network element, a RAN device, and user equipment. That the current 5GS network does not support the capability of performing differentiated QoS handling on data packets in a same traffic flow based on data identifiers means that at least one of the application server, the PCF network element, the SMF network element, the UPF network element, the NEF network element, and the RAN device does not support the capability of performing differentiated QoS handling on data packets in a same traffic flow based on data identifiers. That the current 5GS network supports the capability of performing differentiated QoS handling on data packets in a same traffic flow based on data identifiers means that the application server, the PCF network element, the SMF network element, the UPF network element, the NEF network element, and the RAN device all support the capability of performing differentiated QoS handling on data packets in a same traffic flow based on data identifiers.

In an example, the error indication information is a cause value.

S503: The application function network element performs processing based on the first response message.

This step is optional.

Specifically, when the first response message carries the error indication information, the application server determines that the current 5GS does not support the capability of performing differentiated QoS handling on data packets in a same traffic flow based on data identifiers, or the current 5GS network cannot distinguish between different QoS requirements of different data packets in a same traffic flow based on data identifiers, and the application server does not multiplex data packets having different QoS requirements into a same traffic flow. For example, when differentiated QoS handling needs to be performed on data packets having different QoS requirements, and the capability of performing differentiated QoS handling on data packets in a same traffic flow based on data identifiers is not supported, or the current 5GS network cannot distinguish between different QoS requirements of different data packets in a same traffic flow based on data identifiers, the application server places, in a same traffic flow for transmission, data packets having a same QoS requirement.

S504: An application layer of the user equipment sends an AT command to a communication module of the user equipment.

It should be noted herein that, for a function of the AT command and information carried in the AT command, refer to related descriptions of the AF request in S501. Details are not described herein again. The application layer of the user equipment is an operating system, an application, and the like of the user equipment.

S505: The communication module of the user equipment sends a second response message to the application layer.

The second response message is used to respond to the AT command.

When the communication module of the user equipment determines that the current 5GS network does not support the capability of performing differentiated QoS handling on data packets in a same traffic flow based on data identifiers, or the current 5GS network cannot distinguish between different QoS requirements of different data packets in a same traffic flow based on data identifiers, the second response message carries error indication information. The error indication information indicates that the current 5GS network does not support the capability of performing differentiated QoS handling on data packets in a same traffic flow based on data identifiers, or the current 5GS network cannot distinguish between different QoS requirements of different data packets in a same traffic flow based on data identifiers.

When the communication module of the user equipment determines that the current 5GS network supports the capability of performing differentiated QoS handling on data packets in a same traffic flow based on data identifiers, or the current 5GS network can distinguish between different QoS requirements of different data packets in a same traffic flow based on data identifiers, the second response message indicates that differentiated QoS handling can be performed on the data packets in the same traffic flow.

S506: The application layer of the user equipment performs processing based on the second response message.

This step is optional.

Specifically, when the second response message includes the error indication information, the application layer of the user equipment determines that the current 5GS network does not support the capability of performing differentiated QoS handling on data packets in a same traffic flow based on data identifiers, or the current 5GS network cannot distinguish between different QoS requirements of different data packets in a same traffic flow based on data identifiers, and the application layer of the user equipment does not multiplex data packets having different QoS requirements into a same traffic flow.

Herein, that the current 5GS network does not support the capability of performing differentiated QoS handling on data packets in a same traffic flow based on data identifiers, or that the current 5GS network cannot distinguish between different QoS requirements of different data packets in a same traffic flow based on data identifiers means that a modem of the user equipment does not support the capability of performing differentiated QoS handling on data packets in a same traffic flow based on data identifiers, or cannot distinguish between different data packets in a same traffic flow based on data identifiers.

S507: The user equipment sends the first request to the AMF network element.

This step is optional.

Specifically, the user equipment sends the first request to the AMF network element. The first request is used to request to establish or modify a packet data unit (packet data unit, PDU) session between the user equipment and the AMF network element. The first request carries flow description information, and the flow description information includes the flow identifier, the at least one data identifier, and the QoS requirement parameter corresponding to each data identifier.

It should be noted herein that S507 is performed in a case that the second response message does not carry the error indication information.

Specifically, the user equipment sends the first request to the AMF network element through an access network device.

S508: The AMF network element sends a second request to the SMF network element.

The second request is used to request to establish or modify a PDU session between the SMF network element and the AMF network element. The second request carries the flow identifier, the at least one data identifier, and the QoS requirement parameter corresponding to each data identifier.

S509: The PCF network element generates a PCC rule.

Specifically, the PCF network element generates at least one PCC rule based on the at least one data identifier and the QoS requirement parameter corresponding to each data identifier that are from the application server or the user equipment. One PCC rule includes at least one data identifier corresponding to a same QoS requirement parameter and the corresponding QoS requirement parameter. Specifically, the PCC rule also includes the flow identifier corresponding to the traffic flow. The PCF network element sends the PCC rule to the SMF network element.

It should be understood that, if data identification and the QoS requirement parameter corresponding to the data identifier are from the user equipment, S509 is performed after S510; or if the data identifier and the QoS requirement parameter corresponding to the data identifier are from the application function network element, S509 is performed before S510. The data identifier and the QoS requirement parameter corresponding to the data identifier are from the user equipment. For the PCF network element, after obtaining the flow identifier, the at least one data identifier, and the QoS requirement parameter corresponding to each data identifier that are from the user equipment, the SMF network element sends, to the PCF network element, the flow identifier, the at least one data identifier, and the QoS requirement parameter corresponding to each data identifier. In an example, the SMF network element sends a third request to the PCF network element, where the third request is used to request to create or modify an SM policy association. The third request carries the flow identifier, the at least one data identifier, and the QoS requirement parameter corresponding to each data identifier.

S510: The SMF network element performs processing based on the PCC rule.

Specifically, the SMF network element generates a QoS rule, a QoS profile (QoS Profile), an N4 rule, and the like based on the PCC rule, and respectively sends the QoS rule, the QoS profile, and the N4 rule to the user equipment, the RAN device, and the UPF network element.

It should be noted herein that, for specific descriptions of the QoS rule, the QoS profile, and the N4 rule, refer to related descriptions of the processing rule in the embodiments corresponding to FIG. 2 to FIG. 4. Details are not described herein again.

Optionally, there may be a plurality of UPF network elements in the 5GS network. Some UPF network elements do not support a capability of performing differentiated QoS handling on a data packet based on a data identifier of the data packet, and some UPF network elements support the capability of performing differentiated QoS handling on a data packet based on a data identifier of the data packet. The UPF network element to which the SMF network element sends the N4 rule is a UPF network element that is obtained by the SMF network element from the plurality of UPF network elements and that supports the capability of performing differentiated QoS handling on a data packet based on a data identifier of the data packet.

S511: The SMF network element binds PCC rules to different QoS flows.

It should be understood that there are a plurality of PCC rules, and different PCC rules correspond to different QoS requirements. The SMF network element binds different PCC rules to different QoS flows based on information such as QoS requirements, so that data packets can be subsequently mapped to the different QoS flows based on data identifiers.

S512: The SMF network element sends a fourth request to the UPF network element.

The fourth request is used to request to establish an N4 session between the SMF network element and the UPF network element. The fourth request carries the N4 rule. The N4 rule includes the flow identifier, a data identifier, and a QoS flow identifier corresponding to the data identifier, and is used by the UPF network element to perform corresponding data packet detection and QoS flow mapping based on a data identifier of a downlink data packet.

S513: The SMF network element sends a third response message to the user equipment.

The third response message is used to respond to the first request. The third response message is a PDU session establishment or modification accept message. The third response message carries the QoS rule. Optionally, the QoS rule includes a data identifier and a QoS flow identifier corresponding to the data identifier, and is used by the user equipment to map an uplink data packet to a corresponding QoS flow.

S514: The user equipment, the RAN device, the AMF network element, the SMF network element, the UPF network element, and the PCF network element complete a remaining PDU session establishment or modification procedure.

It should be noted herein that for a specific process in which the user equipment, the RAN device, the AMF network element, the SMF network element, the UPF network element, and the PCF network element complete the remaining PDU session establishment or modification procedure, refer to the section 4.3.2.1 in TS 23.502. Details are not described herein.

S515: The UPF network element receives a downlink data packet sent by the application server, and performs processing.

This step is optional, and is for a downlink service scenario.

Specifically, the UPF network element receives at least one downlink data packet that is in a same traffic flow and that is sent by the application server, and performs detection and obtains a flow identifier and a data identifier of each downlink data packet. The UPF network element maps, to a corresponding QoS flow based on the flow identifier and the data identifier, a downlink data packet that is in the traffic flow and that carries the data identifier, that is, adds, to the corresponding downlink data packet, a QoS flow identifier corresponding to the data identifier.

The downlink data packet may be transmitted according to an RTP, and the data identifier of the downlink data packet is carried in a packet header of an RTP packet. Alternatively, the downlink data packet is transmitted according to an RTCP, and the data identifier of the downlink data packet is carried in a packet header of an RTCP packet.

S516: The user equipment processes an uplink data packet.

This step is optional, and is for a downlink service scenario.

Specifically, the uplink data packet herein is a data packet sent by the application layer of the user equipment to the communication module. The communication module of the user equipment receives at least one uplink data packet that is in a same traffic flow that is sent by the application layer of the user equipment, and performs detection and obtains a flow identifier and a data identifier of each uplink data packet. The UE maps, to a corresponding QoS flow based on the flow identifier and the data identifier, an uplink data packet that is in the traffic flow and that carries the data identifier, that is, adds, to the corresponding uplink data packet, a QoS flow identifier corresponding to the data identifier.

S517: The RAN device performs corresponding QoS handling on different QoS flows.

The RAN device receives different QoS flows sent by the UPF device or the user equipment. The different QoS flows correspond to different QoS requirements, and the RAN device performs corresponding QoS handling on the different QoS flows.

It can be learned that, in the solution of this embodiment, in a hybrid media service transmission scenario, or in a case in which an RTP data packet and an RTCP data packet are multiplexed in a same traffic flow, the UPF network element or the user equipment can implement QoS requirement detection of a data packet of a finer granularity based on a data identifier, and map the data packet to a corresponding QoS flow based on the data identifier, so as to perform corresponding QoS handling. In the case in which the RTP data packet and the RTCP data packet are multiplexed in the same traffic flow, because the RTP data packet and the RTCP data packet can be identified and mapped to corresponding QoS flows, service transmission quality is improved.

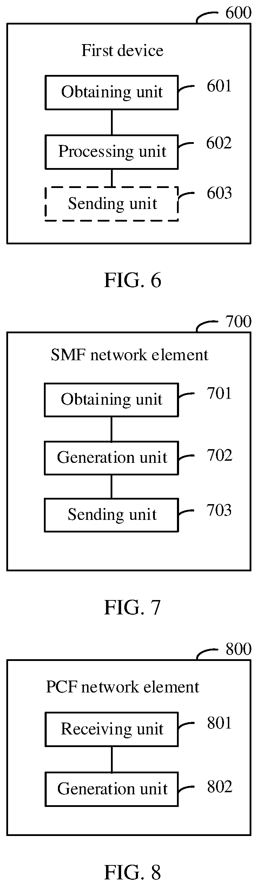

FIG. 6 is a diagram of a structure of a first device according to an embodiment of this application. The first device 600 is the UPF network element or the user equipment in FIG. 1. As shown in FIG. 6, the first device 600 includes:
an obtaining unit 601, configured to obtain a first data packet and a second data packet in a traffic flow, where the first data packet includes a flow identifier of the traffic flow and a first data identifier, and the second data packet includes the flow identifier of the traffic flow and a second data identifier; and
a processing unit 602, configured to perform, based on the first data identifier, the second data identifier, and a processing rule corresponding to the flow identifier, QoS flow mapping on the first data packet and the second data packet, so as to map the first data packet to the first QoS flow for bearing and map the second data packet to the second QoS flow for bearing.

In a possible implementation, the processing unit 602 is specifically configured to:
add an identifier of the first QoS flow to the first data packet, and add an identifier of the second QoS flow to the second data packet, where the first data identifier corresponds to the identifier of the first QoS flow, and the second data identifier corresponds to the identifier of the second QoS flow.

In a possible implementation, the obtaining unit 601 is further configured to:
obtain the processing rule of the traffic flow, where the processing rule includes a data identifier of each data packet in the traffic flow and a QoS flow identifier corresponding to the data identifier of each data packet, and the processing rule of the traffic flow indicates the UPF network element or the user equipment to perform, based on the data identifiers, QoS flow mapping on the data packets in the traffic flow.

It should be understood that one QoS flow identifier corresponds to one or more data identifiers.

In a possible implementation, the processing rule indicates that the data identifier is an SSRC identifier or a payload type identifier.

In a possible implementation, the processing rule indicates that the data identifier is a data type identifier indicating that the data packet is an RTP data packet or an RTCP data packet.

In a possible implementation, the processing rule
indicates that the data identifier of the data packet includes an identifier indicating that the data packet is an RTP data packet and an SSRC identifier of the data packet; or
indicates that the data identifier of the data packet includes an identifier indicating that the data packet is an RTP data packet and a payload type identifier of the data packet; or
indicates that the data identifier of the data packet includes an identifier indicating that the data packet is an RTCP data packet.

In a possible implementation, the processing rule is generated based on the data identifier and a QoS requirement parameter corresponding to the data identifier.

In a possible implementation, the first device is a UPF network element or a user equipment. When the first device is a user equipment, the first device further includes:
a sending unit 603, configured to send the data identifier and the QoS requirement parameter corresponding to the data identifier to an SMF network element or a PCF network element.

It should be noted that, for a specific function implementation of the first device 600, refer to specific descriptions of the embodiment shown in FIG. 2. For example, the obtaining unit 601 is configured to perform related content of S201, and the processing unit 602 and the sending unit 603 are configured to perform related content of S202. Units or modules in the first device 600 may be separately or together combined into one or more other units or modules, or one or more units or modules thereof may be split into a plurality of functionally smaller units or modules. This can implement same operations without affecting implementation of technical effect of embodiments of the present invention. The foregoing units or modules are divided based on logical functions. During actual application, functions of one unit (or module) are implemented by a plurality of units (or modules), or functions of a plurality of units (or modules) are implemented by one unit (or module).

FIG. 7 is a diagram of a structure of an SMF network element according to an embodiment of this application. The SMF network element 700 is the SMF network element in FIG. 1. The SMF network element 700 includes:
an obtaining unit 701, configured to obtain a flow identifier, a first data identifier included in a first data packet in a traffic flow identified by the flow identifier, a second data identifier included in a second data packet in the traffic flow identified by the flow identifier, a first QoS requirement parameter corresponding to the first data identifier, and a QoS requirement parameter corresponding to the second data identifier;
a generation unit 702, configured to generate, based on the flow identifier, the first data identifier, the second data identifier, the first QoS requirement parameter, and the second QoS requirement parameter, a processing rule corresponding to the flow identifier; and
a sending unit 703, configured to send, to a target UPF network element or a user equipment, the processing rule corresponding to the flow identifier, where the processing rule includes the first data identifier, a QoS flow identifier corresponding to the first data identifier, the second data identifier, and a QoS flow identifier corresponding to the second data identifier. The processing rule indicates the UPF network element or the user equipment to perform, based on a data identifier of a data packet in the traffic flow, QoS flow mapping on data packets in the traffic flow, so as to map the first data packet to a first QoS flow for bearing and map the second data packet to a second QoS flow for bearing.

The target UPF network element is a UPF network element that is selected by the SMF network element 700 and that supports a capability of performing differentiated QoS handling based on the data identifier.

In a possible implementation, the processing rule indicates that the data identifier is an SSRC identifier or a payload type identifier.

In a possible implementation, the processing rule indicates that the data identifier is a data type identifier indicating that the data packet is an RTP data packet or an RTCP data packet.

In a possible implementation, the processing rule
indicates that the data identifier of the data packet includes an identifier indicating that the data packet is an RTP data packet and an SSRC identifier of the data packet; or
indicates that the data identifier of the data packet includes an identifier indicating that the data packet is an RTP data packet and a payload type identifier of the data packet; or
indicates that the data identifier of the data packet includes an identifier indicating that the data packet is an RTCP data packet.

In a possible implementation, in an aspect of obtaining the plurality of data identifiers and the QoS requirement parameter corresponding to each data identifier, the obtaining unit 701 is specifically configured to:
obtain a plurality of PCC rules, where each PCC rule includes at least one data identifier corresponding to a same QoS requirement parameter and the corresponding QoS requirement parameter.

It should be noted that, for a specific function implementation of the SMF network element 700, refer to the specific descriptions of the embodiment shown in FIG. 3. For example, the obtaining unit 701 is configured to perform related content of S301, the generation unit 702 is configured to perform related content of S302, and the sending unit 703 is configured to perform related content of S303. Units or modules in the SMF network element 700 may be separately or together combined into one or more other units or modules, or one or more units or modules thereof may be split into a plurality of functionally smaller units or modules. This can implement same operations without affecting implementation of technical effect of embodiments of the present invention. The foregoing units or modules are divided based on logical functions. During actual application, functions of one unit (or module) are implemented by a plurality of units (or modules), or functions of a plurality of units (or modules) are implemented by one unit (or module).

FIG. 8 is a diagram of a structure of a PCF network element according to an embodiment of this application. The PCF network element 800 is the PCF network element in FIG. 1. The PCF network element 800 includes:
a receiving unit 801, configured to receive an application function AF request sent by an application server, where the AF request includes a flow identifier, a plurality of data identifiers, and a QoS requirement parameter corresponding to each data identifier; and
a generation unit 802, configured to generate a plurality of PCC rules based on the plurality of data identifiers and the QoS requirement parameter corresponding to each data identifier, where each PCC rule includes at least one data identifier corresponding to a same QoS requirement parameter and the corresponding QoS requirement parameter; and the flow identifier and the plurality of PCC rules are used to generate a processing rule, the processing rule corresponds to a traffic flow indicated by the flow identifier, the processing rule includes the plurality of data identifiers and a QoS flow identifier corresponding to each data identifier, and the processing rule indicates a UPF network element or a user equipment to perform, based on a data identifier, QoS flow mapping on a data packet in the traffic flow.

In a possible implementation, the processing rule indicates that the data identifier is an SSRC identifier or a payload type identifier.

In a possible implementation, the processing rule indicates that the data identifier is a data type identifier indicating that the data packet is an RTP data packet or an RTCP data packet.

In a possible implementation, the processing rule
indicates that the data identifier of the data packet includes an identifier indicating that the data packet is an RTP data packet and an SSRC identifier of the data packet; or
indicates that the data identifier of the data packet includes an identifier indicating that the data packet is an RTP data packet and a payload type identifier of the data packet; or
indicates that the data identifier of the data packet includes an identifier indicating that the data packet is an RTCP data packet.

It should be noted that, for a specific function implementation of the PCF network element 800, refer to the specific descriptions of the embodiment shown in FIG. 4. For example, the receiving unit 801 is configured to perform related content of S401, and the generation unit 802 is configured to perform related content of S402. Units or modules in the PCF network element 800 may be separately or together combined into one or more other units or modules, or one or more units or modules thereof may be split into a plurality of functionally smaller units or modules. This can implement same operations without affecting implementation of technical effect of embodiments of the present invention. The foregoing units or modules are divided based on logical functions. During actual application, functions of one unit (or module) are implemented by a plurality of units (or modules), or functions of a plurality of units (or modules) are implemented by one unit (or module).

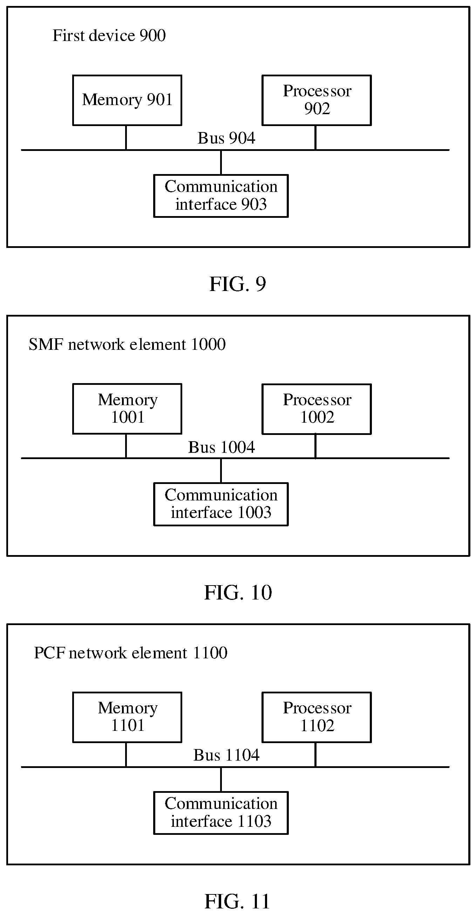

Based on the descriptions of the foregoing method embodiments and related device embodiments, FIG. 9 is a diagram of a structure of a first device 900 further provided in an embodiment of the present invention. The first device 900 shown in FIG. 9 includes a memory 901, a processor 902, a communication interface 903, and a bus 904. The memory 901, the processor 902, and the communication interface 903 implement a communication connection to each other through the bus 904.

Optionally, the memory 901 is a read-only memory (Read-Only Memory, ROM), a static storage device, a dynamic storage device, or a random access memory (Random Access Memory, RAM).

The memory 901 can store a program. When the program stored in the memory 901 is executed by the processor 902, the processor 902 and the communication interface 903 are configured to perform steps of the data processing method in the embodiment shown in FIG. 2.

The processor 902 may be a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to execute a related program, to implement a function that needs to be performed by units in the first device 600 in embodiments of this application, or perform the data processing method in the embodiment shown in FIG. 2 in this application.

Alternatively, the processor 902 may be an integrated circuit chip, and has a signal processing capability. In an implementation process, the steps in the data processing method shown in FIG. 2 in this application may be completed by using a hardware integrated logic circuit in the processor 902 or instructions in a form of software. Optionally, the processor 902 may be a general-purpose processor, a digital signal processor (Digital Signal Processor, DSP), an ASIC, a field programmable gate array (Field Programmable Gate Array, FPGA) or another programmable logic device, a discrete gate or transistor logic device, or a discrete hardware component. The processor 902 may implement or perform the methods, the steps, and logical block diagrams that are disclosed in embodiments of this application. The general-purpose processor is a microprocessor, or the processor is any conventional processor or the like. The steps in the methods disclosed with reference to embodiments of this application may be directly performed and completed by a hardware decoding processor, or may be performed and completed by using a combination of hardware in the decoding processor and a software module. Optionally, the software module is located in a random access memory, a flash memory, a read-only memory, a programmable read-only memory, an electrically erasable programmable memory, a register, or another mature storage medium in the art. The storage medium is located in the memory 901. The processor 902 reads information in the memory 901, and completes, in combination with hardware of the processor 902, functions that need to be performed by units included in the first device 600 in embodiments of this application, or performs the data processing method in the embodiment shown in FIG. 2.

The communication interface 903 uses a transceiver apparatus such as but not limited to a transceiver, to implement communication between the first device 900 and another device (for example, the RAN or SMF network element shown in FIG. 1) or a communication network.

The bus 904 may include a path for transferring information between various components (for example, the memory 901, the processor 902, and the communication interface 903) of the first device 900.

It should be noted that, although only a memory, a processor, and a communication interface are shown in the first device 900 shown in FIG. 9, in a specific implementation process, a person skilled in the art should understand that the first device 900 further includes another component required for implementing normal operation. In addition, based on a specific requirement, a person skilled in the art should understand that the first device 900 may further include hardware components for implementing other additional functions. In addition, a person skilled in the art should understand that the first device 900 may include only components necessary for implementing embodiments of this application, but not necessarily include all the components shown in FIG. 9.

Based on the descriptions of the foregoing method embodiments and related device embodiments, FIG. 10 is a diagram of a structure of an SMF network element 1000 further provided in an embodiment of the present invention. The SMF network element 1000 shown in FIG. 10 includes a memory 1001, a processor 1002, a communication interface 1003, and a bus 1004. The memory 1001, the processor 1002, and the communication interface 1003 implement a communication connection to each other through the bus 1004.

Optionally, the memory 1001 is a ROM, a static storage device, a dynamic storage device, or a RAM.

The memory 1001 may store a program. When the program stored in the memory 1001 is executed by the processor 1002, the processor 1002 and the communication interface 1003 are configured to perform steps of the data processing method in the embodiment shown in FIG. 3.

The processor 1002 is a general-purpose CPU, a microprocessor, an ASIC, a GPU, or one or more integrated circuits, and is configured to execute a related program, to implement a function that needs to be performed by units in the SMF network element 700 in embodiments of this application, or perform the data processing method in the embodiment shown in FIG. 3 in this application.

Alternatively, the processor 1002 may be an integrated circuit chip, and has a signal processing capability. In an implementation process, the steps in the data processing method shown in FIG. 3 in this application may be completed by using a hardware integrated logic circuit in the processor 1002 or instructions in a form of software. Optionally, the processor 1002 may be a general-purpose processor, a DSP, an ASIC, an FPGA or another programmable logic device, a discrete gate or transistor logic device, or a discrete hardware component. The processor 1002 may implement or perform the methods, the steps, and logical block diagrams that are disclosed in embodiments of this application. The general-purpose processor is a microprocessor, or the processor is any conventional processor or the like. The steps in the methods disclosed with reference to embodiments of this application may be directly performed and completed by a hardware decoding processor, or may be performed and completed by using a combination of hardware in the decoding processor and a software module. Optionally, the software module is located in a random access memory, a flash memory, a read-only memory, a programmable read-only memory, an electrically erasable programmable memory, a register, or another mature storage medium in the art. The storage medium is located in the memory 1001. The processor 1002 reads information in the memory 1001, and completes, in combination with hardware of the processor 1002, functions that need to be performed by units included in the SMF network element 700 in embodiments of this application, or performs the data processing method in the embodiment shown in FIG. 3.

The communication interface 1003 uses a transceiver apparatus such as but not limited to a transceiver, to implement communication between the SMF network element 1000 and another device (for example, a UPF network element and a PCF network element) or a communication network.

The bus 1004 may include a path for transferring information between various components (for example, the memory 1001, the processor 1002, and the communication interface 1003) of the SMF network element 1000.

It should be noted that, although only a memory, a processor, and a communication interface are shown in the SMF network element 1000 shown in FIG. 10, in a specific implementation process, a person skilled in the art should understand that the SMF network element 1000 further includes another component required for implementing normal operation. In addition, based on a specific requirement, a person skilled in the art should understand that the SMF network element 1000 may further include hardware components for implementing other additional functions. In addition, a person skilled in the art should understand that the SMF network element 1000 may include only components necessary for implementing embodiments of this application, but not necessarily include all the components shown in FIG. 10.

Based on the descriptions of the foregoing method embodiments and related device embodiments, FIG. 11 is a diagram of a structure of an PCF network element 1100 further provided in an embodiment of the present invention. The PCF network element 1100 shown in FIG. 11 includes a memory 1101, a processor 1102, a communication interface 1103, and a bus 1104. The memory 1101, the processor 1102, and the communication interface 1103 implement a communication connection to each other through the bus 1104.

Optionally, the memory 1101 is a ROM, a static storage device, a dynamic storage device, or a RAM.

The memory 1101 may store a program. When the program stored in the memory 1101 is executed by the processor 1102, the processor 1102 and the communication interface 1103 are configured to perform steps of the data processing method in the embodiment shown in FIG. 4.

The processor 1102 is a general-purpose CPU, a microprocessor, an ASIC, a GPU, or one or more integrated circuits, and is configured to execute a related program, to implement a function that needs to be performed by units in the PCF network element 800 in embodiments of this application, or perform the data processing method in the embodiment shown in FIG. 4 in this application.

Alternatively, the processor 1102 may be an integrated circuit chip, and has a signal processing capability. In an implementation process, the steps in the data processing method shown in FIG. 4 in this application may be completed by using a hardware integrated logic circuit in the processor 1102 or instructions in a form of software. Optionally, the processor 1102 may be a general-purpose processor, a DSP, an ASIC, an FPGA or another programmable logic device, a discrete gate or transistor logic device, or a discrete hardware component. The processor 1102 may implement or perform the methods, the steps, and logical block diagrams that are disclosed in embodiments of this application. The general-purpose processor is a microprocessor, or the processor is any conventional processor or the like. The steps in the methods disclosed with reference to embodiments of this application may be directly performed and completed by a hardware decoding processor, or may be performed and completed by using a combination of hardware in the decoding processor and a software module. Optionally, the software module is located in a random access memory, a flash memory, a read-only memory, a programmable read-only memory, an electrically erasable programmable memory, a register, or another mature storage medium in the art. The storage medium is located in the memory 1101. The processor 1102 reads information in the memory 1101, and completes, in combination with hardware of the processor 1102, functions that need to be performed by units included in the PCF network element 800 in embodiments of this application, or performs the data processing method in the embodiment shown in FIG. 4.

The communication interface 1103 uses a transceiver apparatus such as but not limited to a transceiver, to implement communication between the PCF network element 1100 and another device (for example, a PCF network element and an application server) or a communication network.

The bus 1104 may include a path for transferring information between various components (for example, the memory 1101, the processor 1102, and the communication interface 1103) of the PCF network element 1100.

It should be noted that, although only a memory, a processor, and a communication interface are shown in the PCF network element 1100 shown in FIG. 11, in a specific implementation process, a person skilled in the art should understand that the PCF network element 1100 further includes another component required for implementing normal operation. In addition, based on a specific requirement, a person skilled in the art should understand that the PCF network element 1100 may further include hardware components for implementing other additional functions. In addition, a person skilled in the art should understand that the PCF network element 1100 may include only components necessary for implementing embodiments of this application, but not necessarily include all the components shown in FIG. 11.

An embodiment of this application further provides a chip. The chip includes a processor and a data interface. The processor reads, through the data interface, instructions stored in a memory, to perform the data processing method in embodiments of this application.

Optionally, in an implementation, the chip may further include the memory, the memory stores the instructions, and the processor is configured to execute the instructions stored in the memory. When the instructions are executed, the processor is configured to perform the data processing method.

An embodiment of this application further provides a computer-readable storage medium. The computer-readable storage medium stores instructions. When the instructions are run on a computer or a processor, the computer or the processor is caused to perform one or more steps in any one of the foregoing methods.

An embodiment of this application further provides a computer program product including instructions. When the computer program product runs on a computer or a processor, the computer or the processor is caused to perform one or more steps in any one of the foregoing methods.

A person skilled in the art can appreciate that functions described with reference to various illustrative logical blocks, modules, and algorithm steps disclosed and described in this specification may be implemented by hardware, software, firmware, or any combination thereof. If implemented by software, the functions described with reference to the various illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium like a data storage medium, or may include any communication medium that facilitates transmission of a computer program from one place to another place (for example, according to a communication protocol). In this manner, the computer-readable medium may generally correspond to: (1) a non-transitory tangible computer-readable storage medium, or (2) a communication medium like a signal or a carrier. The data storage medium may be any usable medium that can be accessed by one or more computers or one or more processors to retrieve instructions, code, and/or data structures for implementing the technologies described in this application. A computer program product may include a computer-readable medium.

By way of example and not limitation, such computer-readable storage media may include a RAM, a ROM, an EEPROM, a CD-ROM or another optical disc storage apparatus, a magnetic disk storage apparatus or another magnetic storage apparatus, a flash memory, or any other medium that can store required program code in a form of instructions or data structures and that can be accessed by a computer. In addition, any connection is properly referred to as a computer-readable medium. For example, if instructions are transmitted from a website, a server, or another remote source through a coaxial cable, an optical fiber, a twisted pair, a digital subscriber line (digital subscriber line, DSL), or a wireless technology like infrared, radio, or microwave, the coaxial cable, the optical fiber, the twisted pair, the DSL, or the wireless technology like infrared, radio, or microwave is included in a definition of the medium. However, it should be understood that the computer-readable storage medium and the data storage medium do not include connections, carriers, signals, or other transitory media, but actually mean non-transitory tangible storage media. Disks and discs used in this specification include a compact disc (Compact Disc, CD), a laser disc, an optical disc, a digital versatile disc (digital versatile disc, DVD), and a Blu-ray disc. The disks usually reproduce data magnetically, whereas the discs reproduce data optically by using lasers. Combinations of the above should also be included within the scope of the computer-readable medium.

The instructions may be executed by one or more processors, such as one or more DSPs, general-purpose microprocessors, ASICs, FPGAs, or other equivalent integrated or discrete logic circuits. Therefore, the term "processor" used in this specification may refer to the foregoing structure, or any other structure that may be used in implementation of the technologies described in this specification. In addition, in some aspects, functions described with reference to various illustrative logical blocks, modules, and steps described in this specification may be provided within dedicated hardware and/or software modules configured for encoding and decoding, or may be incorporated into a combined codec. In addition, the technologies may be implemented in one or more circuits or logic elements.

In the several embodiments provided in this application, it should be understood that the disclosed system, apparatus, and method may be implemented in other manners. For example, division into the units is merely logical function division and may be other division in actual implementation. For example, a plurality of units or components may be combined or integrated into another system, or some features may be ignored or not performed. Optionally, the displayed or discussed mutual couplings or direct couplings or communication connections are implemented by using some interfaces. The indirect couplings or communication connections between the apparatuses or units are implemented, for example, in electronic, mechanical, or other forms.

Optionally, the units described as separate components are or are not physically separate, and parts displayed as units are or are not physical units, that is, are located at one position, or are distributed on a plurality of network units. Some or all of the units may be selected based on actual requirements to achieve the objectives of the solutions of embodiments.

All or some of the foregoing embodiments may be implemented using software, hardware, firmware, or any combination thereof. When software is used to implement embodiments, all or a part of the embodiments may be implemented in a form of a computer program product. The computer program product includes one or more computer instructions. When the computer program instructions are loaded and executed on a computer, the procedures or the functions according to embodiments of this application are all or partially generated.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A data processing method, applied to a first device, wherein the method comprises:
obtaining a first data packet and a second data packet in a traffic flow, wherein the first data packet comprises a first data identifier and a flow identifier of the traffic flow, and the second data packet comprises a second data identifier and the flow identifier of the traffic flow; and
performing, based on the first data identifier, the second data identifier, and a processing rule corresponding to the flow identifier, quality of service QoS flow mapping on the first data packet and the second data packet, so as to map the first data packet to a first QoS flow for bearing and map the second data packet to a second QoS flow for bearing.

2. The method according to claim 1, wherein the performing, based on the first data identifier, the second data identifier, and the processing rule corresponding to the flow identifier, QoS flow mapping on the first data packet and the second data packet comprises:
adding an identifier of the first QoS flow to the first data packet, and adding an identifier of the second QoS flow to the second data packet, wherein the first data identifier corresponds to the identifier of the first QoS flow, and the second data identifier corresponds to the identifier of the second QoS flow.

3. The method according to claim 1 or 2, wherein the method comprises:
obtaining the processing rule corresponding to the flow identifier, wherein the processing rule comprises a data identifier of each data packet in the traffic flow and a QoS flow identifier corresponding to the data identifier of each data packet, and the processing rule indicates the first device to perform, based on the data identifiers, QoS flow mapping on the data packets in the traffic flow.

4. The method according to any one of claims 1 to 3, wherein the processing rule indicates that the data identifier is a synchronization source SSRC identifier or a payload type identifier.

5. The method according to any one of claims 1 to 3, wherein the processing rule indicates that the data identifier is a data type identifier indicating that the data packet is a real-time transport protocol RTP data packet or a real-time transport control protocol RTCP data packet.

6. The method according to any one of claims 1 to 3, wherein the processing rule,
indicates that the data identifier comprises an identifier indicating that the data packet is an RTP data packet and an SSRC identifier of the data packet; or
indicates that the data identifier comprises an identifier indicating that the data packet is an RTP data packet and a payload type identifier of the data packet; or
indicates that the data identifier is an identifier indicating that the data packet is an RTCP data packet.

7. The method according to any one of claims 1 to 6, wherein the processing rule is generated based on the data identifier and a QoS requirement parameter corresponding to the data identifier.

8. The method according to any one of claims 1 to 7, wherein the first device is a user equipment, and the method further comprises:
sending the data identifier and the QoS requirement parameter corresponding to the data identifier to a session management function SMF network element or a policy control function PCF network element.

9. A data processing method, applied to a session management function SMF network element, wherein the method comprises:
obtaining a flow identifier, a first data identifier comprised in a first data packet in a traffic flow identified by the flow identifier, a second data identifier comprised in a second data packet in the traffic flow identified by the flow identifier, a first quality of service QoS requirement parameter corresponding to the first data identifier, and a second QoS requirement parameter corresponding to the second data identifier;
generating, based on the flow identifier, the first data identifier, the second data identifier, the first QoS requirement parameter, and the second QoS requirement parameter, a processing rule corresponding to the flow identifier; and
sending the processing rule to a user plane function UPF network element or a user equipment, wherein the processing rule is used to perform, based on a data identifier of a data packet in the traffic flow, QoS flow mapping on data packets in the traffic flow, so as to map the first data packet to a first QoS flow for bearing and map the second data packet to a second QoS flow for bearing.

10. The method according to claim 9, wherein the processing rule indicates that the data identifier is a synchronization source SSRC identifier or a payload type identifier.

11. The method according to claim 9, wherein the processing rule indicates that the data identifier is a data type identifier indicating that the data packet is a real-time transport protocol RTP data packet or a real-time transport control protocol RTCP data packet.

12. The method according to claim 9, wherein the processing rule,
indicates that the data identifier comprises an identifier indicating that the data packet is an RTP data packet and comprises a synchronization source SSRC identifier of the data packet; or
indicates that the data identifier comprises an identifier indicating that the data packet is an RTP data packet and a payload type identifier of the data packet; or
indicates that the data identifier is an identifier indicating that the data packet is an RTCP data packet.

13. The method according to any one of claims 9 to 12, wherein the obtaining a plurality of data identifiers and the QoS requirement parameter corresponding to each data identifier comprises:
obtaining a plurality of PCC rules, wherein each PCC rule comprises at least one data identifier corresponding to a same QoS requirement parameter and the corresponding QoS requirement parameter.

14. The method according to any one of claims 9 to 12, wherein the target UPF network element is a UPF network element that is selected by the SMF network element and that supports a capability of performing differentiated QoS handling based on the data identifier.

15. A data processing method, applied to a policy control function PCF network element, wherein the method comprises:
receiving an application function AF request sent by an application server, wherein the AF request comprises a flow identifier, a plurality of data identifiers, and a quality of service QoS requirement parameter corresponding to each data identifier; and
generating, based on the plurality of data identifiers and the QoS requirement parameter corresponding to each data identifier, a plurality of PCC rules, wherein each PCC rule comprises at least one data identifier corresponding to a same QoS requirement parameter and the corresponding QoS requirement parameter; and
the flow identifier and the plurality of PCC rules are used to generate a processing rule, the processing rule corresponds to a traffic flow indicated by the flow identifier, the processing rule comprises the plurality of data identifiers and a QoS flow identifiers corresponding to each data identifier, and the processing rule indicates a user plane function UPF network element or a user equipment to perform, based on a data identifier, QoS flow mapping on a data packet in the traffic flow.

16. The method according to claim 15, wherein the processing rule indicates that the data identifier is a synchronization source SSRC identifier or a payload type identifier.

17. The method according to claim 15, wherein the processing rule indicates that the data identifier is a data type identifier indicating that the data packet is a real-time transport protocol RTP data packet or a real-time transport control protocol RTCP data packet.

18. The method according to claim 15, wherein the processing rule
indicates that the data identifier comprises an identifier indicating that the data packet is an RTP data packet and comprises a synchronization source SSRC identifier of the data packet; or
indicates that the data identifier comprises an identifier indicating that the data packet is an RTP data packet and a payload type identifier of the data packet; or
indicates that the data identifier indicates that the data packet is an RTCP data packet.

19. The method according to claim 15, wherein the method further comprises:
sending a first response message to the application server, wherein the first response message comprises indication information indicating that a capability of identifying the data identifier is not supported.

20. The method according to claim 19, wherein the first response message is sent when it is determined that the UE or the UPF network element does not support the capability of identifying the data identifier.

21. A first device, wherein the first device comprises a unit or a module for implementing the method according to any one of claims 1 to 8.

22. A session management function SMF network element, wherein the SMF network element comprises a unit or a module for implementing the method according to any one of claims 9 to 14.

23. A policy control function PCF network element, wherein the PCF network element comprises a unit or a module for implementing the method according to any one of claims 15 to 20.

24. A data processing method, wherein the method is applied to a communication system, the communication system comprises user equipment, a user plane function UPF network element, a session management function SMF network element, and an application server, and the method comprises:
obtaining, by the SMF network element, a flow identifier, a first data identifier comprised in a first data packet in a traffic flow identified by the flow identifier, a second data identifier comprised in a second data packet in the traffic flow identified by the flow identifier, a first quality of service QoS requirement parameter corresponding to the first data identifier, and a second QoS requirement parameter corresponding to the second data identifier that are from the user equipment or the application server;
generating, by the SMF network element based on the flow identifier, the first data identifier, the second data identifier, the first QoS requirement parameter, and the second QoS requirement parameter, a processing rule corresponding to the flow identifier, wherein the processing rule indicates the UPF network element or the user equipment to perform, based on a data identifier, QoS flow mapping on a data packet in the traffic flow, and the processing rule comprises the first data identifier, a QoS flow corresponding to the first data identifier, the second data identifier, and a QoS flow corresponding to the second data identifier;
sending, by the SMF network element, the processing rule to the UPF network element or the user equipment;
sending, by the application server, the first data packet and the second data packet to the UPF network element, or obtaining, by the user equipment, the first data packet and the second data packet; and
performing, by the UPF network element or the user equipment based on the first data identifier, the second data identifier, and the processing rule corresponding to the flow identifier, quality of service QoS flow mapping on the first data packet and the second data packet, so as to map the first data packet to a first QoS flow for bearing and map the second data packet to a second QoS flow for bearing.

25. A communication system, wherein the communication system comprises user equipment, a user plane function UPF network element, a session management function SMF network element, and an application server, wherein
the SMF network element is configured to obtain a flow identifier, a first data identifier comprised in a first data packet in a traffic flow identified by the flow identifier, a second data identifier comprised in a second data packet in the traffic flow identified by the flow identifier, a first quality of service QoS requirement parameter corresponding to the first data identifier, and a second QoS requirement parameter corresponding to the second data identifier that are from the user equipment or the application server;
the SMF network element is further configured to generate, based on the flow identifier, the first data identifier, the second data identifier, the first QoS requirement parameter, and the second QoS requirement parameter, a processing rule corresponding to the flow identifier, wherein the processing rule indicates the UPF network element or the user equipment to perform, based on a data identifier, QoS flow mapping on a data packet in the traffic flow, and the processing rule comprises the first data identifier, a QoS flow corresponding to the first data identifier, the second data identifier, and a QoS flow corresponding to the second data identifier;
the SMF network element is further configured to send the processing rule to the UPF network element or the user equipment;
the application server is configured to send the first data packet and the second data packet to the UPF network element, or the user equipment is configured to obtain the first data packet and the second data packet; and
the UPF network element or the user equipment is configured to perform, based on the first data identifier, the second data identifier, and the processing rule corresponding to the flow identifier, quality of service QoS flow mapping on the first data packet and the second data packet, so as to map the first data packet to a first QoS flow for bearing and map the second data packet to a second QoS flow for bearing.

26. A first device, comprising a processor and a memory, wherein the memory is configured to store program code, and the processor is configured to execute the program code, to implement the method according to any one of claims 1 to 8.

27. A session management function SMF network element, comprising a processor and a memory, wherein the memory is configured to store program code, and the processor is configured to execute the program code, to implement the method according to any one of claims 9 to 14.

28. A policy control function PCF network element, comprising a processor and a memory, wherein the memory is configured to store program code, and the processor is configured to execute the program code, to implement the method according to any one of claims 15 to 20.

29. A computer-readable storage medium, wherein the computer-readable storage medium stores a computer program, and when the computer program is executed by a processor, the method according to any one of claims 1 to 20 is implemented.
